# EUROPÄISCHE PATENTSCHRIFT

(11) **EP 3 941 643 B1**
(45) Veröffentlichungstag und Bekanntmachung des Hinweises auf die Patenterteilung: **20.08.2025**
(21) Anmeldenummer: 20714502.0
(22) Anmeldetag: 19.03.2020
(51) Int. Cl.: B05B 1/32, B05C 5/02, B29C 48/155, B29C 48/30

(54) **VORRICHTUNG UND VERFAHREN ZUM AUFTRAGEN EINER MATERIALRAUPE**
DEVICE AND METHOD FOR APPLYING A MATERIAL BEAD
DISPOSITIF ET PROCÉDÉ POUR LE DÉPÔT D'UNE CHENILLE DE MATÉRIAU

(30) Priorität: 20.03.2019 DE 102019203819
(43) Veröffentlichungstag der Anmeldung: 26.01.2022
(73) Patentinhaber: Fraunhofer-Gesellschaft zur Förderung der angewandten Forschung e.V., 80686 München (DE)
(72) Erfinder: LINDERMANN, Matthias, 27726 Worpswede (DE); GEBAUER, Ingo, 28213 Bremen (DE); SAYER, Florian, 28213 Bremen (DE)
(74) Vertreter: Pfenning, Meinig & Partner mbB
(86) Internationale Anmeldenummer: PCT/EP2020/057710
(87) Internationale Veröffentlichungsnummer: WO 2020/188068

(56) Entgegenhaltungen:
- WO-A1-2008/028970
- US-A- 2 959 359
- US-A- 5 799 879
- US-A- 5 961 759
- US-B1- 8 469 292

## Beschreibung

Die Erfindung betrifft eine Vorrichtung zum Auftragen einer Materialraupe und ein dazugehöriges Verfahren.

Im Stand der Technik, beispielsweise in der Windenergieanlagenrotorblattfertigung, etwa beim Verkleben von Schalen für Windenergieanlagenrotorblätter, werden Materialraupen aus pastösem Klebstoff manuell auf eine Applikationsfläche aufgebracht und anschließend mit einer Schablone in eine gewünschte Kontur gebracht.

Das bringt einen hohen Fertigungsaufwand mit sich und limitiert die Reproduzierbarkeit hinsichtlich Geometrie und Qualität der so erzeugten Materialraupen.

Das Dokument US 5 799 879 A offenbart eine Vorrichtung zur Erzeugung eines Fluidstrahls, insbesondere zum Auftragen von Leim und/oder eines weichen Fluids auf eine Bahn, mit einem Düsenkopf, der eine Düse trägt, die mit einer an einem Ende einer mit dem Fluid beaufschlagten Leitung angeordneten Austrittsöffnung versehen ist. Dabei wird auf einfache und kostengünstige Weise eine Steuerung des Fluidstrahlquerschnitts erreicht, wobei im Bereich der Austrittsöffnung ein elastisches Element vorgesehen ist, das eine mit der Leitung in Verbindung stehende Durchgangsöffnung aufweist und das zwischen zwei gegeneinander verschiebbaren Druckelementen gelagert ist.

Das Dokument US 2 959 359 A offenbart Düsen, insbesondere eine Düse mit einem elastischen Körperabschnitt, der leicht von einem Zustand, in dem er einen im wesentlichen festen Strahl mit im allgemeinen kreisförmigem Querschnitt ausstößt, über ein ovales Grobmuster bis hin zu einem feinen, flachen, fächerförmigen Sprühnebel einstellbar ist.

Vor diesem Hintergrund ist es Aufgabe der vorliegenden Erfindung, den Fertigungsaufwand für Materialraupen zu reduzieren und dabei die Qualität der Materialraupen sicherzustellen.

Dies wird durch eine Vorrichtung zum Auftragen einer Materialraupe mit den Merkmalen des unabhängigen Anspruchs 1 bzw. durch ein Verfahren gemäß einem der nebengeordneten Verfahrensansprüche erreicht. Vorteilhafte Weiterbildungen ergeben sich aus den abhängigen Unteransprüchen sowie aus der Beschreibung und den Figuren.

Die Vorrichtung zum Auftragen einer Materialraupe umfasst einen flexiblen Düsenkörper.

Der Düsenkörper definiert ein von einem Material für die Materialraupe durchströmbares Volumen, das zumindest teilweise von einer durch den Düsenkörper ausgebildeten Umwandung begrenzt wird. Dabei ist eine Zuführöffnung zum Zuführen des Materials in das durchströmbare Volumen vorgesehen. Ferner definiert der Düsenkörper einen Mündungsbereich, durch den das Material aus dem Volumen austreten kann.

Weiterhin ist eine Aktorik bereitgestellt, die an dem Düsenkörper angeordnet ist und dafür eingerichtet ist, einen Querschnitt des Mündungsbereichs unter Verformung des Düsenkörpers zu verändern.

Die Umwandung bildet eine Barriere zwischen dem Volumen und der Aktorik.

In einer ersten nicht beanspruchten Konfiguration, ist das durchströmbare Volumen als innerer Hohlraum ausgebildet, der von einer durch den Düsenkörper ausgebildeten Umwandung begrenzt wird. Der Mündungsbereich ist dann als Austrittsöffnung des inneren Hohlraums ausgebildet, die der Zuführöffnung abgewandt ist.

Die Vorrichtung gemäß dieser ersten Konfiguration lässt sich wie folgt beschreiben:
Die Vorrichtung zum Auftragen einer Materialraupe umfasst einen flexiblen Düsenkörper. Der Düsenkörper weist einen von einem Material für die Materialraupe durchströmbaren inneren Hohlraum auf, der von einer durch den Düsenkörper ausgebildeten Umwandung begrenzt wird. Dabei ist eine Zuführöffnung zum Zuführen des Materials in den inneren Hohlraum sowie eine dieser Zuführöffnung abgewandte Austrittsöffnung für das Material vorgesehen.

Weiterhin wird eine Aktorik bereitgestellt, die an dem Düsenkörper angeordnet ist und die dafür eingerichtet ist, einen Querschnitt der Austrittsöffnung des Düsenkörpers unter Verformung des Düsenkörpers zu verändern.

Die Umwandung bildet eine Barriere zwischen dem inneren Hohlraum und der Aktorik.

Neben der eben beschriebenen ersten Konfiguration sind gemäß dieser Anmeldung auch andere Konfigurationen möglich.

In einer zweiten Konfiguration, die gemäß Anspruch 1 beansprucht wird, ist das durchströmbare Volumen als halboffenes Volumen ausgebildet. Dieses ist nach unten und im Mündungsbereich geöffnet und wird zumindest oben und an zwei gegenüberliegenden Seiten von der durch den Düsenkörper ausgebildeten Umwandung begrenzt.

Der geöffnete Mündungsbereich und die geöffnete Unterseite bilden eine zusammenhängende Öffnung aus.

Wenn die Vorrichtung gemäß der zweiten Konfiguration bei ihrer Verwendung auf eine Applikationsfläche aufgelegt wird, kann die Applikationsfläche das durchströmbare Volumen nach unten begrenzen, indem sie die geöffnete Unterseite schließt. Eine Austrittsöffnung wird dann durch den Mündungsbereich definiert. Die Austrittsöffnung ist dabei unten durch die Applikationsfläche definiert. Die Austrittsöffnung wird insbesondere unten von der Applikationsfläche begrenzt und seitlich sowie oben von einer Umrandung des Mündungsbereichs begrenzt.

Dabei ist in der zweiten Konfiguration die Zuführöffnung zum Zuführen des Materials in das unten durch die Applikationsfläche begrenzte durchströmbare Volumen vorgesehen.

Weiterhin wird in dieser zweiten Konfiguration die Aktorik bereitgestellt, die an dem Düsenkörper angeordnet ist und die dafür eingerichtet ist, den Querschnitt des Mündungsbereichs und also der Austrittsöffnung unter Verformung des Düsenkörpers zu verändern.

Die Umwandung bildet in der zweiten Konfiguration wieder eine Barriere zwischen dem durchströmbaren Volumen und der Aktorik.

Neben der ersten und der zweiten Konfiguration sind auch weitere anmeldungsgemäße Konfigurationen möglich.

Durch die Barriere zwischen dem inneren Hohlraum bzw. dem durchströmbaren Volumen und der Aktorik kann erreicht werden, dass die Aktorik nicht in Kontakt mit dem Material kommt, wenn dieses durch die Zuführöffnung dem Düsenkörper zugeführt wird und dann durch den inneren Hohlraum bzw. das durchströmbare Volumen zur Austrittsöffnung bzw. zum Mündungsbereich bewegt wird, um dort wieder auszutreten. Der Düsenkörper bzw. die Umwandung des Hohlraums bzw. durchströmbaren Volumens trennt also die Aktorik von der Materialführung des aufzutragenden Materials. Dadurch kann eine Kontamination von beispielsweise der Aktorik oder weiteren Stützstrukturen oder auch Steuerungs- oder Regelungselementen für die Aktorik verhindert werden. In einer Ausführung kann die Vorrichtung so ausgestaltet sein, dass alle oder manche der Teile der Vorrichtung, die bei Verwendung in Kontakt mit dem Material der Materialraupe kommen, zum einmaligen Gebrauch ausgestaltet sind und nach Verwendung entsorgt werden können. Insbesondere kann der Düsenkörper nach Verwendung entsorgt werden, so dass ein aufwändiger Reinigungsprozess entfallen kann.

Das zugeführte Material kann bei Verwendung der Vorrichtung durch die Austrittsöffnung austreten und bildet dann die Materialraupe. Die Kontur der Materialraupe kann dabei auf reproduzierbare Weise durch Einstellen des Querschnitts der Austrittsöffnung bzw. des Mündungsbereichs bestimmt bzw. eingestellt werden. Eine Nachbearbeitung der Materialraupe zum Herstellen einer gewünschten Kontur kann dadurch typischerweise entfallen.

Die Vorrichtung kann dafür eingerichtet sein, dass durch die Aktorik der Querschnitt der Austrittsöffnung bzw. des Mündungsbereichs verändert wird, während das Material den Düsenkörper durchfließt. Durch die Aktorik und die Flexibilität des Düsenkörpers kann dann erreicht werden, dass die Kontur der applizierten Materialraupe im Rahmen der Beweglichkeit der Aktorik und der Flexibilität des Düsenkörpers verändert werden kann, wobei die Kontur insbesondere während des Auftragens kontrolliert und kontinuierlich geändert werden kann.

Durch die Vorrichtung kann dann z.B. beim Verkleben zweier Komponenten eine für einen vorliegenden Klebespalt bedarfsgerechte Materialverwendung sichergestellt werden und überschüssiges Material in der Verklebung vermieden werden. Außerdem kann sich eine hohe Reproduzierbarkeit der mit Hilfe der Vorrichtung erzeugten Materialraupen bzw. Kleberaupen ergeben. Ein Einsatz und insbesondere ein Wechsel von Geometrieschablonen ist typischerweise nicht mehr nötig, so dass Lufteinschlüsse oder ungewünschte Unstetigkeiten in der Materialraupe, die dadurch entstehen können, vermieden werden können.

Es kann ein Achsensystem definiert werden, das so orientiert wird, dass die Austrittsöffnung oder der Mündungsbereich bzw. eine Umrandung der Austrittsöffnung oder des Mündungsbereichs in einer x-y-Ebene liegt, wenn sich der Düsenkörper in einem neutralen Zustand befindet. Der neutrale Zustand kann beispielsweise dadurch definiert sein, dass der Düsenkörper relaxiert (also nicht elastisch verformt) ist und/oder dadurch, dass die mit dem Düsenkörper verbundene Aktorik sich in einer Ausgangsposition befindet. Die Änderung des Querschnitts der Austrittsöffnung kann dabei so erfolgen, dass die Geometrie der Austrittsöffnung sich innerhalb der x-y-Ebene verändert. Die Austrittsöffnung kann dabei in dieser x-y-Ebene verbleiben, das heißt, es ist möglich, dass ihr Normalenvektor und damit auch eine Richtung, in die das Material austritt, konstant bleiben. Es versteht sich, dass im Fall der zweiten Konfiguration die Umrandung des Mündungsbereichs keine umlaufende Umrandung ist, sondern eine drei Seiten umspannende Umrandung, wobei die untere Seite fehlt. Hier lässt sich die x-y-Ebene anhand der drei vorhandenen Seiten ebenso definieren.

Die nachfolgend beschriebenen Ausführungsformen lassen sich vorteilhaft in anmeldungsgemäßen Vorrichtungen einsetzen, insbesondere in Verbindung mit der ersten Konfiguration und/oder in Verbindung mit der zweiten Konfiguration.

Die Aktorik kann mindestens einen Finger umfassen, der durch eine Stelleinheit bewegbar ist. Der mindestens eine Finger kann beispielsweise an der Umrandung der Austrittsöffnung bzw. des Mündungsbereichs oder in der Nähe der Umrandung der Austrittsöffnung bzw. des Mündungsbereichs an dem Düsenkörper befestigt sein.

Die Stelleinheit ist in einer möglichen Ausführungsform als pneumatische oder elektromechanische Aktorik ausgebildet.

Die Aktorik zum Verändern des Querschnitts der Austrittsöffnung oder des Mündungsbereichs des Düsenkörpers kann in beispielhaften Ausführungen mindestens 2, mindestens 3 oder mindestens 5 Finger umfassen. Alternativ oder zusätzlich kann sie höchstens 20 Finger oder höchstens 15 Finger umfassen.

Die Aktorik und der Düsenkörper sind in einer Ausführung so ausgestaltet, dass unterschiedliche große Austrittsöffnungen gleicher oder anderer Geometrie einstellbar sind - beispielsweise so, dass sich unterschiedliche große kreisförmige oder elliptische Austrittsöffnungen einstellen lassen, und/oder so, dass sich unterschiedliche polygonale Querschnittsgeometrien einstellen lassen, deren Größe vorzugsweise jeweils wiederum verändert werden kann. Beispielsweise ist ein dreieckiger Querschnitt für die Austrittsöffnung einstellbar, wobei eine untere Seite des Dreiecks, deren Länge mit der Aktorik einstellbar sein kann, horizontal verlaufen kann und eine obere Ecke des Dreiecks durch die Aktorik zur Veränderung der Höhe und der übrigen Seitenlängen des Dreiecks mit Hilfe der Aktorik bewegbar sein kann. Die Aktorik und der Düsenkörper können so ausgestaltet sein, dass eine Breite der Austrittsöffnung mindestens 20 mm oder mindestens 30 mm oder mindestens 50 mm und/oder höchstens 400 mm oder höchstens 300 mm oder höchstens 200 mm betragen kann. Es versteht sich, dass im Falle der zweiten Konfiguration die einstellbaren Austrittsöffnungen auf solche Geometrien beschränkt sind, die unten der Applikationsfläche entsprechen, also in der Regel unten flach sind. Der veränderbare Mündungsbereich kann beispielsweise polygonale oder kreisbogenartige oder ellipsenbogenartige Formen annehmen.

In Ausführungen des Düsenkörpers erlaubt dieser eine Vergrößerung der Breite und/oder der Höhe des Querschnitts des Mündungsbereichs um mindestens 50 %, vorzugsweise um mindestens 80 %, besonders bevorzugt um mindestens 90 % im Vergleich zum Querschnitt des Mündungsbereichs in relaxierten Zustand. In einer vorteilhaften Ausgestaltung können Breite und Höhe simultan um 100% vergrößert werden, ohne dass der Düsenkörper Schaden nimmt. Etwa erlaubt er eine Vergrößerung von Breite und/oder Höhe des Querschnitts des Mündungsbereichs um bis zu 110 % oder um bis zu 150 % oder um bis zu 200 %.

Der Düsenkörper kann ein hochelastisches Silikon enthalten oder daraus bestehen.

Die Aktorik kann in einer Ausführungsform an einer Außenseite des Düsenkörpers angeordnet sein.

Die Aktorik kann für den Düsenkörper eine formgebende Außenstruktur mit veränderlicher Form bilden, gegen die der Düsenkörper unter Förderdruck drückbar ist. Das heißt die Aktorik, also beispielsweise Finger der Aktorik, können entlang einer Länge des Düsenkörpers angeordnet sein. Durch eine derartige Außenstruktur kann neben einer Verformung der Öffnung auch eine Kontrolle der Form des Düsenkörpers entlang seiner Länge erreicht werden.

Der Düsenkörper kann länglich ausgebildet sein. Die Form des durchströmbaren Volumens bzw. des inneren Hohlraums und/oder die äußere Form des Düsenkörpers können entlang seiner Länge variieren.

Der Düsenkörper kann eine Anschlussmöglichkeit für die Zuführvorrichtung - beispielsweise für den Zuführschlauch - aufweisen, die es ermöglicht, die Zuführvorrichtung mit dem Düsenkörper zu verbinden. Durch die angeschlossene bzw. verbundene Zuführvorrichtung kann das Material in die Zuführöffnung und so in den inneren Hohlraum geleitet werden. Die Anschlussmöglichkeit kann beispielsweise als Stutzen ausgebildet sein.

Der Düsenkörper kann im Bereich der Umrandung des Mündungsbereichs bzw. der Austrittsöffnung einen nach außen umgebogenen Abschnitt aufweisen. Das heißt, ein Material des Düsenkörpers, das die Umwandung des Düsenkörpers bildet, kann beispielsweise auf der Seite des Mündungsbereichs bzw. der Austrittsöffnung nach außen umgestülpt sein. Dabei kann das Material in einer Ausführungsform komplett umgestülpt sein. Beispielsweise kann das Material um 180° oder ungefähr 180° umgestülpt sein, so dass ein Materialende des Materials nach hinten, in die der Austrittsöffnung abgewandte Richtung zeigt. Das Material kann auch um mehr als 180°, beispielsweise etwa 270° oder noch mehr umgestülpt sein, so dass das Materialende in Richtung einer Außenseite der Umwandung zeigt und ein Hinterschnitt gebildet wird.

Der Düsenkörper kann im Bereich der Umrandung des Mündungsbereichs alternativ oder zusätzlich auch außenliegende Haltestrukturen aufweisen, die zum Verbinden mit der Aktorik oder einer Tragstruktur eingerichtet sind. Die außenliegenden Haltestrukturen können um eine Verformung der Austrittsöffnung vorteilhaft zu ermöglichen ebenfalls in der Nähe des Mündungsbereichs bereitgestellt werden.

Die Aktorik kann ein einer Ausführungsform formschlüssig mit dem Düsenkörper verbunden sein. Die Aktorik, also beispielsweise der bzw. die Finger können dafür eine oder mehrere Ausnehmungen und/oder einen oder mehrere Hinterschnitte zum Hinterhaken und/oder zu den Haltestrukturen komplementäre Strukturen aufweisen. Die Aktorik kann dabei an der Umrandung oder in der Nähe der Umrandung des Mündungsbereichs bzw. der Austrittsöffnung befestigt sein, um die Austrittsöffnung möglichst direkt verformen zu können. Zur formschlüssigen Befestigung an der Umrandung oder in der Nähe der Umrandung kann beispielsweise der nach außen umgebogene Bereich des Düsenkörpers, der einen Hinterschnitt bilden kann, bereitgestellt und zur Befestigung an der Aktorik über die Aktorik gestülpt werden. Der umgebogene Bereich kann in einer Ausführung an einem Hinterschnitt oder in einer Ausnehmung der Aktorik hintergehakt werden. Es können - sofern vorhanden - auch die Haltestrukturen und die dazu komplementären Strukturen miteinander verbunden werden, insbesondere formschlüssig verbunden werden, etwa durch Ineinanderstecken oder Ineinanderschieben.

Insbesondere im Fall der zweiten Konfiguration können seitliche Haltestrukturen vorgesehen sein, die ebenfalls Haltestrukturen im obigen Sinne sein können. Diese können dafür eingerichtet sein, derart mit einer Tragstruktur verbunden zu werden, dass ein Andrücken des Düsenkörpers an die Applikationsfläche ermöglicht wird. Diese seitlichen Haltestrukturen können dafür beispielsweise in einem unteren Abschnitt der Seiten der Umwandung bereitgestellt werden, vorzugsweise am unteren Ende der Seiten der Umwandung. In möglichen Ausführungen werden die seitlichen Haltestrukturen nicht nur in der Nähe des Mündungsbereichs sondern über einen größeren Teil der Länge, insbesondere über eine ganze Länge des Düsenkörpers bereitgestellt. Die Seiten der Umwandung können so besonders gut auf die Applikationsfläche aufgedrückt werden. Die mit der Tragstruktur verbundenen seitlichen Haltestrukturen können außerdem ungewollte Verformungen des Düsenkörpers verhindern, wenn dieser unter dem Druck des durchströmenden Materials steht und/oder durch die Aktorik verformt wird. Die seitlichen Haltestrukturen werden beispielsweise ebenfalls über eine Aktorik mit der Tragstruktur verbunden. Diese Aktorik ermöglicht insbesondere eine Verbreiterung des Querschnitts des Mündungsbereichs und also der Austrittsöffnung.

Bei der Vorrichtung kann die Aktorik in einem oberen Umrandungsabschnitt der Umrandung des Mündungsbereichs bzw. der Austrittsöffnung oder in der Nähe des oberen Umrandungsabschnitts angreifen, so dass der Querschnitt der Austrittsöffnung durch Verformung dieses oberen Umrandungsabschnitts mittels der Aktorik einstellbar ist. In der ersten Konfiguration kann der Düsenkörper einen dem oberen Umrandungsabschnitt abgewandten unteren Umwandungsabschnitt umfassen. Dieser dem oberen Umrandungsabschnitt abgewandte untere Umrandungsabschnitt ist typischerweise bei Verwendung der Vorrichtung der Applikationsfläche zugewandt. Das heißt, eine entlang dem unteren Umrandungsabschnitt austretende Seite der Materialraupe kommt typischerweise auf der Applikationsfläche zu liegen, während eine entlang dem oberen Umrandungsabschnitt austretende Seite der Materialraupe eine Oberseite der Materialraupe darstellt, für die durch die im oberen Umrandungsabschnitt angeordnete Aktorik die Kontur vorgegeben werden kann.

Der untere Umrandungsabschnitt der Austrittsöffnung kann dazu ausgebildet sein, an der Applikationsfläche, auf die die Materialraupe aufgetragen werden soll, angelegt zu werden. Das kann beispielsweise unter Verformung des unteren Umrandungsabschnitts durch die Applikationsfläche erfolgen. Der untere Umrandungsabschnitt kann dabei frei verformbar ausgestaltet sein, so dass er sich beispielsweise bei einem Andrücken an die Applikationsfläche an diese anpassen kann.

Der dem oberen Umrandungsabschnitt abgewandte untere Umrandungsabschnitt kann zurückgesetzt und/oder eingeschnitten sein. Das heißt, er kann gegenüber dem oberen Umrandungsabschnitt zurückgesetzt bzw. eingeschnitten sein, so dass der Düsenkörper an der Austrittsöffnung nach unten geöffnet ist. Ein entsprechender Einschnitt kann bei der Herstellung des Düsenkörpers gleich mit gefertigt werden, beispielsweise wenn der Düsenkörper additiv gefertigt wird, oder nachträglich eingebracht werden. Die Austrittsöffnung ist durch den Einschnitt bzw. zurückgesetzten Bereich entsprechend vergrößert und erstreckt sich außer in der x-y-Ebene (in der sie durch die Aktorik, die am oberen Umrandungsabschnitt angreift, in ihrer Geometrie verändert werden kann) an der Unterseite des Düsenkörpers auch in z-Richtung. Durch die in die z-Richtung vergrößerte Austrittsöffnung kann das austretende Material früher in Kontakt mit der Applikationsfläche kommen und kann beispielsweise in manchen Ausführungen beim Auftragen von oben durch den darüber befindlichen Düsenkörper noch an die Applikationsfläche angedrückt werden.

Die zuletzt beschriebenen beiden Ausführungsformen, die den unteren Umrandungsabschnitt betreffen, basieren, wie erwähnt, auf der ersten Konfiguration. Sie ähneln der zweiten Konfiguration, bei der ein unterer Umrandungsabschnitt fehlt, insofern, dass auch hier die Form des Materials bereits von der Applikationsfläche definiert sein kann, wenn sich das Material noch in dem durchströmbaren Volumen befindet - entweder weil die Applikationsfläche das durchströmbare Volumen zumindest teilweise begrenzt oder weil die Applikationsfläche eine untere Wand des inneren Hohlraums verformt oder dagegen drückt, wenn diese darauf aufgelegt wird, und auf diese Weise die Form des darin befindlichen Materials beeinflusst.

Der Düsenkörper kann für jede der Konfigurationen optional so ausgestaltet sein, dass er ein Puffervolumen ausbildet. Das Puffervolumen liegt beispielsweise auf der der Austrittsöffnung gegenüberliegenden Seite. Das Puffervolumen kann so angeordnet sein, dass es überschüssiges Material zumindest vorübergehend aufnehmen kann, wenn eine Austrittsgeschwindigkeit des Materials und/oder eine Bewegung der Vorrichtung verlangsamt wird. Bezüglich der Zuführöffnung kann beispielsweise das durchströmbare Volumen in einem hinteren Bereich und das Puffervolumen auf der anderen Seite der Zuführöffnung, in einem vorderen Bereich, angeordnet sein. Es kann beispielsweise eine optimale Füllung des Düsenkörpers gewährleistet werden und/oder es kann eine Regelmäßigkeit der Materialraupe begünstigt werden, indem Differenzen aus Materialzuführung und Materialaustritt - bedingt etwa durch nicht-konstante Vorschubgeschwindigkeiten - dadurch kompensiert werden können. Wenn das Puffervolumen auf der der Austrittsöffnung abgewandten Seite des Düsenkörpers angeordnet ist, kann die Zuführöffnung zwischen der Austrittsöffnung und dem Puffervolumen in den Düsenkörper münden. Die Zuführöffnung kann beispielsweise seitlich oder oben in den Düsenkörper münden.

Das Puffervolumen kann insbesondere einen größeren Querschnitt aufweisen als das durchströmbare Volumen.

Der Düsenkörper kann alternativ oder zusätzlich in sämtlichen Ausführungen eine stirnseitige Öffnung aufweisen. Die stirnseitige Öffnung ist der Austrittsöffnung abgewandt. Hierfür wird die Zuführöffnung beispielsweise so angeordnet, dass sie oben oder seitlich in den Düsenkörper mündet. Die stirnseitige Öffnung kann für sich genommen oder in Kombination mit dem Puffervolumen die Druckverhältnisse und/oder eine vorteilhafte Verteilung des Materials innerhalb des Düsenkörpers, also innerhalb des durchströmbaren Volumens und/oder des Puffervolumens, begünstigen.

Es ist auch möglich, für den unteren Umrandungsabschnitt eine feste Form vorzugeben, beispielsweise durch eine Rahmenstruktur. Dadurch wird die Umrandung an der Unterseite steif und behält auch dann seine Form, wenn durch das im Inneren des Düsenkörpers befindliche Material ein Druck verursacht wird. Dadurch wird es insbesondere ermöglicht, die Vorrichtung mit einem Abstand zur Applikationsfläche an der Applikationsfläche entlang zu bewegen. Das kann beispielsweise vorgesehen sein, wenn die Bewegung durch einen Roboter ausgeführt werden soll.

Neben den Varianten des frei verformbaren und des steifen unteren Umrandungsabschnitts gibt es auch die Möglichkeit, für den unteren Umrandungsabschnitt ebenfalls eine Aktorik zur Verfügung zu stellen, mit der der untere Umrandungsabschnitt verformt werden kann. Die Aktorik wird dann also auch für die Verformung des unteren Umrandungsabschnitts bereitgestellt. Dazu greift die Aktorik dann auch am unteren Umrandungsabschnitt oder in der Nähe des unteren Umrandungsabschnitts an. Der Querschnitt der Austrittsöffnung ist dann durch Verformung des oberen und/oder des unteren Umrandungsabschnitts mittels der Aktorik einstellbar.

In einer Ausführung, in der der obere und der untere Umrandungsabschnitt verformt werden können, ist die Aktorik symmetrisch um die Ausgangsöffnung angeordnet. Beispielsweise kann sie in einer Ausführung rotationssymmetrisch bzw. gleichmäßig um die Öffnung angeordnet sein, etwa mit rotationssymmetrisch und/oder im gleichmäßigen Abstand angeordneten Fingern, die an der Umrandung oder in der Nähe der Umrandung der Austrittsöffnung befestigt sind.

Die Vorrichtung kann in möglichen Ausführungen eine Kippaktorik umfassen, die dafür eingerichtet ist, die Austrittsöffnung des Düsenkörpers zu kippen. Die Austrittsöffnung kann dabei beispielsweise gegenüber einer durch ihren Querschnitt in relaxiertem Zustand definierten Ebene unter Verformung des Düsenkörpers gekippt werden. Beim Kippen der Austrittsöffnung kann der Querschnitt der Austrittsöffnung konstant gehalten werden. Der Querschnitt kann beim Kippen der Austrittsöffnung aber auch verändert werden.

Die Kippaktorik kann durch die Aktorik zum Verändern des Querschnitts der Austrittsöffnung des Düsenkörpers ausgebildet sein. Das ist beispielsweise in solchen Ausführungen möglich, in denen die Aktorik zum Verändern des Querschnitts der Austrittsöffnung am oberen und am unteren Umrandungsabschnitt bereitgestellt wird. Dann kann durch diese Aktorik die Austrittsöffnung auch gekippt werden - insbesondere so, dass die Austrittsöffnung nach oben oder nach unten gerichtet wird. Im Fall der zweiten Konfiguration, bei der der untere Umrandungsabschnitt fehlt, kann die Aktorik oder eine Fixierung in einem unteren Bereich seitlicher Umrandungsabschnitte des Mündungsbereichs bereitgestellt werden, beispielsweise über die seitlichen Haltestrukturen.

Es ist jedoch auch möglich, die Kippaktorik zusätzlich zu der Aktorik zum Verändern des Querschnitts der Austrittsöffnung des Düsenkörpers als weitere Aktorik bereitzustellen. Diese weitere Aktorik kann in einer Ausführung an der Aktorik zum Verändern des Querschnitts der Austrittsöffnung angreifen. Die weitere Aktorik kann ihrerseits Finger und Stelleinheiten umfassen. Die weitere Aktorik kann als pneumatische oder elektromechanische Aktorik ausgebildet.

Der Düsenkörper kann beispielsweise als Wegwerfprodukt zur einmaligen Verwendung ausgebildet sein.

Der Düsenkörper kann beispielsweise einstückig ausgebildet sein.

Der Düsenkörper kann beispielsweise additiv gefertigt sein.

Der Düsenkörper kann beispielsweise aus einem gummiartigen Material, etwa aus einem hochflexiblen Kunststoff, gefertigt sein. Beispielsweise können für den Düsenkörper Materialien aus der Tango-Familie oder aus der Agilus30-Familie der Stratasys Ltd. verwendet werden. Das Material des Düsenkörpers kann beispielsweise einen Shore A-Härtegrad aufweisen. In beispielhaften Ausführungen des Düsenkörpers kann die Shore-Härte des Düsenkörpers beispielsweise mindestens 10 oder mindestens 20 oder mindestens 27 betragen und/oder höchstens 100 oder höchstens 95 betragen.

Der Düsenkörper kann in manchen Ausführungen auch eine räumlich variierende Shore-Härte aufweisen. Beispielsweise kann er im Bereich der Austrittsöffnung weicher sein also im Bereich der Zuführöffnung (etwa im Bereich des möglichen Stutzens).

Die Vorrichtung kann in einer Ausführung eine Steuer- und/oder Regelungseinrichtung aufweisen. Die Steuer- und/oder Regelungseinrichtung kann dafür eingerichtet sein, die Vorrichtung entlang der Applikationsfläche zu bewegen und/oder die Aktorik zu bewegen. Die Bewegung entlang der Applikationsfläche und/oder die Bewegung der Aktorik kann dabei vorprogrammierbar sein.

Die Vorrichtung kann in einer möglichen Ausführung einen Sensor zum Erfassen einer Kontur der Materialraupe umfassen. Dann kann beispielsweise durch die Steuer- und/oder Regelungseinrichtung die Aktorik basierend auf von dem Sensor erfassten Werten gesteuert werden.

Die Anmeldung bezieht sich auch auf ein Verfahren zur Verwendung der vorgestellten Vorrichtung.

Bei dem Verfahren kann insbesondere ein zähflüssiges Material verwendet werden, um eine standfeste Materialraupe herzustellen, deren Form durch den Querschnitt des Mündungsbereichs definiert ist. Es versteht sich, dass es für die Verfahren typisch ist, dass die Materialien derart zäh sind, dass die Materialraupen eine Standfestigkeit aufweisen, so dass sie diese Form zumindest so lange beibehalten oder im Wesentlichen beibehalten bis eine Weiterverarbeitung erfolgt, für die eben gerade diese Form der Materialraupe benötigt wird.

In einem solchen Verfahren wird typischerweise das Material für die Materialraupe durch die Zuführöffnung zugeführt, so dass es aus der Austrittsöffnung austritt. Dabei wird, während das Material aus der Austrittsöffnung austritt, die Vorrichtung entlang einer Applikationsfläche bewegt, so dass durch das austretende Material die Materialraupe auf der Applikationsfläche gebildet wird. Während das Material austritt und die Vorrichtung entlang der Applikationsfläche bewegt wird, kann dabei der Querschnitt der Austrittsöffnung durch die Aktorik verändert werden, um so eine Kontur der Materialraupe zu verändern.

Dies gilt sowohl für die Verwendungen von Vorrichtungen gemäß der ersten Konfiguration, bei denen die Austrittsöffnung komplett durch den Mündungsbereich des Düsenkörpers definiert sein kann, als auch für Vorrichtungen gemäß der zweiten Konfiguration, bei denen der Düsenkörper so auf die Applikationsfläche aufgelegt wird, dass sie die Austrittsöffnung unten abschließt und somit eine Verformung nur im durch den Mündungsbereich gebildeten Teil der Austrittsöffnung erfolgt.

Das Bewegen der Vorrichtung entlang der Applikationsfläche, gemäß einem gewünschten Verlauf der Materialraupe, kann dabei von einem Benutzer durchgeführt bzw. gesteuert werden oder automatisiert erfolgen. Das Bewegen der Aktorik kann dabei - unabhängig davon, wie die Bewegung der Vorrichtung entlang der Applikationsfläche erfolgt - ebenfalls durch einen Benutzer oder automatisiert erfolgen.

Für ein manuelles Bewegen der Vorrichtung entlang der Applikationsfläche kann die Vorrichtung beispielsweise in einer Aufhängung oder Führung verankert sein, so dass sie von Hand verfahrbar bzw. verschiebbar ist. Für ein automatisiertes Bewegen der Vorrichtung entlang der Applikationsfläche kann die Vorrichtung beispielsweise mit einem Roboter, etwa einem Sechsachsroboter, verbunden sein.

Wenn das Bewegen der Aktorik durch einen Benutzer durchgeführt bzw. gesteuert werden soll, kann beispielsweise eine Eingabemöglichkeit, etwa in Form eines Benutzerinterfaces oder eines Schalters, Drehknopfes oder Hebels, bereitgestellt werden, mit der der Benutzer den Querschnitt einstellen kann, beispielsweise indem er damit eine kontinuierliche Bewegung der Aktorik steuert oder indem er aus einer vorgegebenen Auswahl von Querschnitten (Querschnittgeometrien und/oder Querschnittgrößen) auswählt.

Es ist auch möglich, dass das Bewegen der Vorrichtung entlang der Applikationsfläche manuell oder automatisch erfolgt, während, die Bewegung der Aktorik basierend auf von dem möglichen Sensor erfassten Werten gesteuert bzw. geregelt wird.

Das Bewegen der Vorrichtung entlang der Applikationsfläche kann derart geschehen, dass die Vorrichtung, d.h. insbesondere der untere Umrandungsabschnitt oder die Unterseite des Düsenkörpers, mit der Applikationsfläche kontakt hat, also beispielsweise gegen sie gedrückt wird. Das ist bei Verfahren zur Verwendung der Vorrichtung gemäß der zweiten Konfiguration vorgesehen, damit die Applikationsfläche das durchströmbare Volumen und die Austrittsöffnung unten begrenzen kann. Es kann allerdings auch derart geschehen, dass die Vorrichtung einen vorgegebenen Abstand zu der Applikationsfläche einhält, etwa dann, wenn es sich um eine Vorrichtung handelt, bei der der Düsenkörper einen inneren Hohlraum aufweist.

In einer Ausführung des Verfahrens wird der Kippwinkel mittels der möglichen Kippaktorik während des Auftragens der Materialraupe verändert. Das kann beispielsweise in Abhängigkeit von einer Geometrie oder von einem Neigungswinkel der Applikationsfläche geschehen.

In einer Ausführungsform des Verfahrens werden mindestens 100 g oder mindestens 1 kg oder mindestens 3 kg und/oder höchstens 25 kg oder höchstens 20 kg Material pro Minute appliziert.

In einer Ausführungsform des Verfahrens hat die Materialraupe eine Breite von mindestens 20 mm oder mindestens 30 mm oder mindestens 50 mm und/oder eine Breite von höchstens 400 mm oder höchstens 300 mm oder höchstens 200 mm.

Es ist bei dem Verfahren beispielsweise möglich, eine oder mehrere Materialraupen unter Verwendung desselben Düsenkörpers herzustellen, wobei die eine oder die mehreren Materialraupen ein kombiniertes Gewicht von 100 kg oder mehr oder 500 kg oder mehr oder 800 kg oder mehr haben. Alternativ oder zusätzlich kann es sein, dass die so hergestellte(n) eine oder mehreren Materialraupe(n) ein kombiniertes Gewicht von höchstens 3000 kg haben. Beispielsweise ist es möglich, dass spätestens nachdem 3000 kg Material den Düsenkörper durchlaufen haben, der Düsenkörper ausgewechselt wird.

Die Applikationsfläche, auf die die Materialraupe aufgebracht wird, kann beispielsweise eine Fläche einer Windenergieanlagenkomponente, etwa eines Windenergieanlagenrotorblatts, sein. Beispielsweise kann das Material ein Klebstoff sein, der zum von Verkleben von Rotorblatthalbschalen bzw. Versteifungselementen von Rotorblättern auf diese Rotorblatthalbschalen und/oder Versteifungselemente aufgebracht wird.

Bei dem zugeführten Material kann es sich beispielsweise um ein pastöses Medium oder um ein aufschäumendes Medium handeln.

In manchen Ausführungen wird als zugeführtes Material ein reaktiver Klebstoff, beispielsweise ein reaktiver Zweikomponentenklebstoff, verwendet. Eine Aushärtezeit des verwendeten Klebstoffs kann beispielsweise zwischen 60 und 90 Minuten betragen.

Die Vorrichtung bzw. das Verfahren kann insbesondere geeignet sein, um Materialraupen aus schwer handhabbaren Materialien, die beispielsweise sehr zäh bzw. hochpastös sind.

In einem Beispiel wird die Vorrichtung in der Nahrungsmittelindustrie verwendet, wobei es sich bei dem zugeführten Material um ein Lebensmittel, beispielsweise um Gebäckteig, handeln kann. Hier kann durch die Vorrichtung eine Trennung des Lebensmittels von Maschinenbauteilen erreicht werden. Dabei kann der Düsenkörper aus einem lebensmittelechten Material gefertigt sein.

Der Düsenkörper kann bspw. auch, etwa wenn die Vorrichtung in der Nahrungsmittelindustrie eingesetzt werden soll, aus Silikon, insbesondere aus lebensmittelechtem Silikon gefertigt sein. Beispielsweise kann der Düsenkörper auch durch Vakuumguss hergestellt werden.

Es ist beispielsweise möglich, dass die Vorrichtung zur additiven Fertigung verwendet wird und für die Materialraupe ein Material für die additive Fertigung gewählt wird. Dann können insbesondere auch besonders große Strukturen - zum Beispiel etwa die oben genannten Materialmengen oder noch größere Materialmengen umfassende Strukturen - mit Hilfe des hier gezeigten Verfahrens additiv gefertigt werden. Beispielsweise kann ein 3D-Druck von Beton erfolgen.

In einem anderen Beispiel kann die Vorrichtung im Formwerkzeugbau verwendet werden, wobei beispielsweise eine Bepastung von Bauteiloberflächen damit durchgeführt wird. In einem anderen Beispiel wird die Vorrichtung im Automobilbau verwendet.

Es sei erwähnt, dass Merkmale, die nur im Zusammenhang mit dem Verfahren beschrieben wurden auch für die Vorrichtung beansprucht werden können und umgekehrt.

Es sei ferner erwähnt, dass unter einer "Applikationsfläche" im Sinne dieser Anmeldung jeder Ort zu verstehen ist, an dem die anmeldungsgemäße Materialraupe aufgebracht werden kann bzw. aufgebracht werden soll. Der Begriff ist nicht dahingehend einschränkend zu verstehen, dass es sich hierbei um eine "Fläche" im engeren Sinne handeln muss. Es kann sich ebenso beispielsweise um eine Nut, Kerbe, Kante oder ähnliches handeln.

Im Folgenden werden die Vorrichtung und das Verfahren anhand von Figuren näher erläutert.

Darin zeigen
- Figuren 1 bis 3: eine Vorrichtung zum Auftragen einer Materialraupe in einer Konfiguration 1A,
- Figur 4: eine formschlüssige Verbindung zwischen einer Aktorik und einem Düsenkörper der Vorrichtung zum Auftragen einer Materialraupe,
- Figur 5: die Vorrichtung zum Auftragen einer Materialraupe in einer Konfiguration 1B,
- Figuren 6 bis 8: die Vorrichtung zum Auftragen einer Materialraupe in einer Konfiguration 1C,
- Figuren 9 und 10: die Vorrichtung zum Auftragen einer Materialraupe in einer Konfiguration 1D,
- Figur 11: die Verwendung der Vorrichtung zum Auftragen einer Materialraupe und
- Figuren 12 und 13: den Düsenkörper für die Vorrichtung zum Auftragen einer Materialraupe in einer möglichen Konfiguration,
- Figuren 14 und 15: die Vorrichtung zum Auftragen einer Materialraupe gemäß der Erfindung 2 und
- Figuren 16 und 17: den Düsenkörper für die Vorrichtung gemäß der Erfindung.

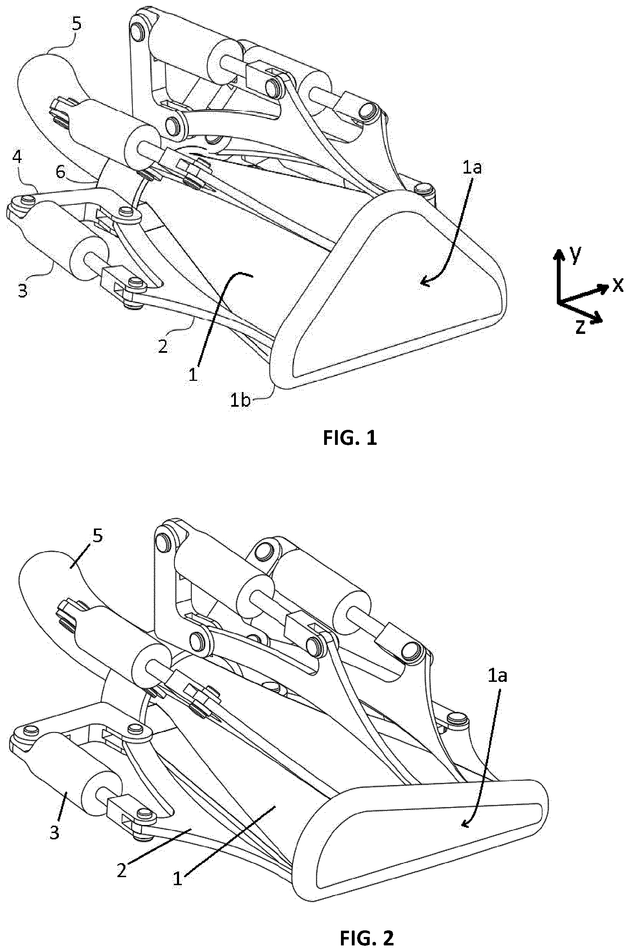

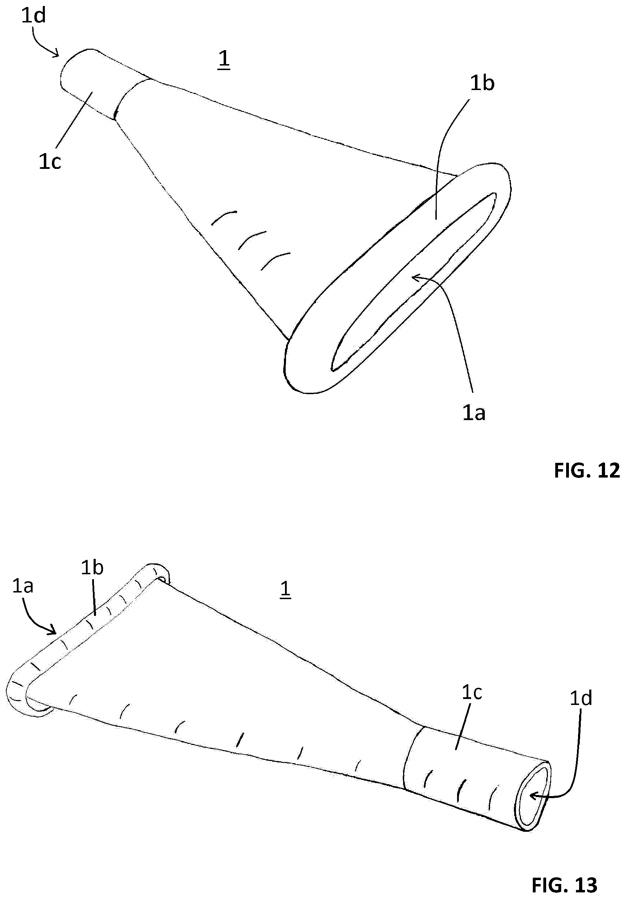

Figur 1 zeigt eine Vorrichtung zum Auftragen einer Materialraupe. Diese umfasst einen flexiblen Düsenkörper 1, der einen von einem Material für die Materialraupe 9 durchströmbaren inneren Hohlraum aufweist, der von einer durch den Düsenkörper 1 ausgebildeten Umwandung begrenzt wird. In der Figur 1 ist eine Austrittsöffnung 1a erkennbar, aus der bei Verwendung der Vorrichtung das Material austreten kann, um die Materialraupe zu bilden. An einem der Austrittsöffnung abgewandten Ende des inneren Hohlraums befindet sich eine Zuführöffnung (siehe unten, bspw. Beschreibung zu Figur 13), die mit einem Zuführschlauch 5 verbunden ist. Durch die Zuführöffnung kann im Verfahren zur Verwendung der Vorrichtung ein Material dem inneren Hohlraum zugeführt werden. Dieses bewegt sich unter Druck durch den inneren Hohlraum und tritt dann wie erwähnt aus der Austrittsöffnung 1a aus. Weiterhin ist eine Aktorik an dem Düsenkörper 1 angeordnet. Sie ist dafür eingerichtet, einen Querschnitt der Austrittsöffnung 1a unter Verformung des Düsenkörpers 1 zu verändern.

Die Umwandung, die den inneren Hohlraum begrenzt, bildet eine Barriere zwischen dem inneren Hohlraum und der Aktorik. So wird erreicht, dass die Aktorik nicht von dem Material kontaminiert wird. Einzig der Düsenkörper 1 steht in Kontakt mit dem Material und kann nach Gebrauch entsorgt werden. Die Aktorik umfasst fünf Finger 2, die jeweils durch Stelleinheiten 3 bewegbar sind. Die Finger 2 verlaufen an einer Umrandung 1b der Austrittsöffnung 1a oder in der Nähe der Umrandung 1b der Austrittsöffnung 1a an dem Düsenkörper 1 befestigt ist. Die Stelleinheiten sind pneumatisch oder elektromechanisch ausgebildet oder dazu ausgebildet, manuell verstellt zu werden. Die Aktorik ist an einer Außenseite des Düsenkörpers 1 angeordnet. Die Aktorik erstreckt sich dabei entlang der Außenseite des Düsenkörpers und bildet so für den Düsenkörper 1 eine formgebende Außenstruktur mit durch die Stelleinheiten veränderlicher Form. Das heißt, die Aktorik verformt nicht nur die Austrittsöffnung 1a sondern kann die Form des Düsenkörpers 1 entlang seiner Länge beeinflussen. Bei Verwendung der Vorrichtung wird der flexible Düsenkörper 1 durch den anliegenden Förderdruck gegen die stützende und formgebende Außenstruktur gedrückt. Es besteht eine funktionale Trennung zwischen der stützenden und formgebenden Außenstruktur und dem inneren, flexiblen Düsenkörper, der im direkten Kontakt zum fördernden Material steht und dieses von der Außenstruktur trennt.

Die Aktorik umfasst weiterhin einen Grundkörper 6 auf dem mehrere Halterungen 4 angeordnet sind. Die Halterungen sind mit den Fingern 2 verbunden. Die Finger 2 können aktiv einzeln manuelle, pneumatisch oder elektromechanisch über die Stelleinheiten 3 bewegt werden. Eine passive Verstellung über ein zentrales Element wie z.B. eine Schablone ist ebenfalls denkbar. An dem Grundkörper befindet sich ebenfalls eine Befestigungsmöglichkeit für den Zuführschlauch.

Die Aktorik greift in einem oberen Umrandungsabschnitt der Umrandung 1b der Austrittsöffnung 1a an. So ist der Querschnitt der Austrittsöffnung 1a durch Verformung des oberen Umrandungsabschnitts mittels der Aktorik einstellbar. Ein dem oberen Umrandungsabschnitt abgewandter unterer Umrandungsabschnitt ist frei verformbar gehalten und kann sich an eine Oberflächenform einer Applikationsfläche anpassen, wenn er bei Verwendung der Vorrichtung dagegen gedrückt wird. Die fünf Finger 2 der Aktorik sind so angeordnet, dass die den oberen Umrandungsabschnitt verformen können, während der untere Umrandungsabschnitt gerade bleibt. Durch die am weitesten außen angeordneten Finger 2 kann der untere Umrandungsabschnitt dabei unter Zug gehalten werden, bzw. kann eine Öffnungsbreite der Austrittsöffnung 1a eingestellt werden. Beispielsweise können Öffnungsbreiten zwischen 50 mm 200 mm einstellbar sein. Die Finger 2 sind weiterhin so angeordnet, dass eine Dreiecksform für die Austrittsöffnung 1a vorgegeben werden kann.

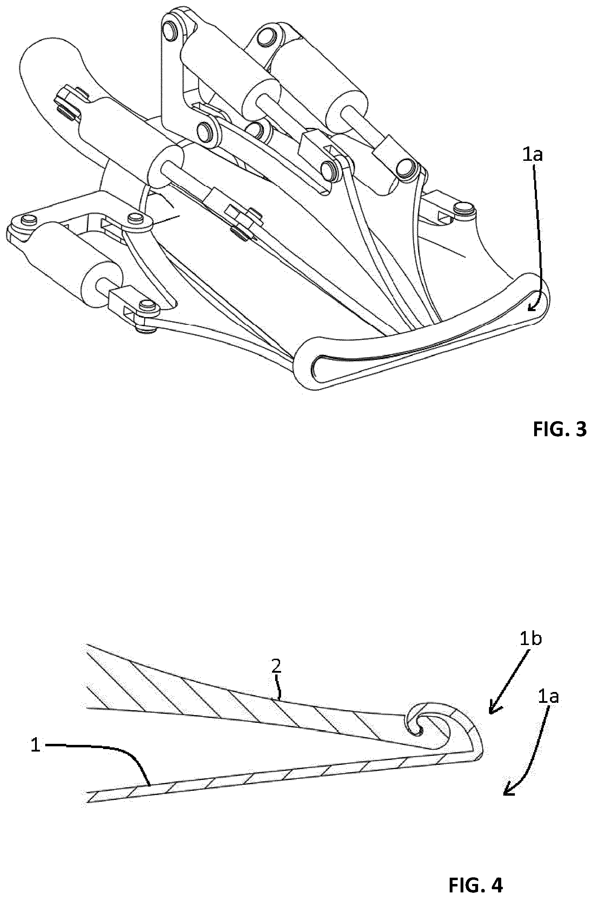

In den Figuren 1 bis 3 sind beispielhaft mögliche Geometrien für die Austrittsöffnung 1a, die mit den wie hier gezeigt angeordneten Fingern 2 einstellbar sind, gezeigt. Die Halterungen der Finger 2 können drehbar gelagert sein, um eine Drehflexibilität zu gewährleisten und somit asymmetrische Materialraupen erzeugen zu können. In Figur 1 wird für die Austrittsöffnung 1a dabei eine Form eines gleichschenkligen Dreiecks bereitgestellt. In Figur 2hat die Austrittsöffnung 1a eine asymmetrische Dreiecksform. In Figur 3 ist ein nahezu geschlossener Zustand des Düsenkörpers 1 dargestellt. Über die Verstellung der Finger 2 kann die Düseneinheit 1 geöffnet oder geschlossen werden, und es kann durch die variable Form des Austrittsquerschnitts eine Kleberaupe mit entsprechender Geometrie appliziert werden.

In den Figuren 1 bis 3 ist erkennbar, dass die Umrandung 1b der Austrittsöffnung 1a durch einen nach außen umgebogenen Abschnitt des Düsenkörpers 1 ausgebildet ist. Die Aktorik ist formschlüssig mit dem Düsenkörper 1 verbunden, indem der nach außen umgebogene Bereich des Düsenkörpers 1 über die Finger 2 der Aktorik gestülpt dort hintergehakt ist. Dies ist in Figur 4 im Detail dargestellt.

Figur 4 illustriert die Befestigung der Düseneinheit 1 an den Fingern 2. Die Befestigung zwischen Fingern 2 und Düsenkörper 1 erfolgt formschlüssig über einen Hinterschnitt im Düsenkörper 1, der durch den umgebogenen Bereich ausgebildet ist. Der sich in der Figur links vom umgebogenen Bereich erstreckende Abschnitt des Düsenkörpers 1 stellt die Umwandung des inneren Hohlraums dar. Der umgebogene Bereich ist dabei um etwas mehr als 270° umgebogen, so dass ein Materialende in Richtung einer Außenseite der Umwandung des Düsenkörpers zeigt und so der Hinterschnitt gebildet wird. Der umgebogene Bereich wird über die Finger 2 gestülpt und hintergehakt. Der Finger 2 weist zusätzlich eine Aussparung auf, in die der umgebogene Bereich eingerastet ist. Die Finger 2 greifen in dieser Anordnung an der Umrandung 1b bzw. in unmittelbarer Nähe der Umrandung 1b der Austrittsöffnung 1a an und ermöglichen so eine gute Kontrolle der Geometrie der Austrittsöffnung 1a. In der Figur 4 ist erkennbar, dass durch die durchgehende Ausgestaltung der Umwandung eine Barriere zwischen innerem Hohlraum und der außenliegenden Aktorik geschaffen wird.

Die gezeigte formschlüssige Verbindung ermöglicht ein leichtes Verbinden und Entfernen des Düsenkörpers. So kann die Vorrichtung durch Überstülpen des umgebogenen Bereichs des Düsenkörpers 1 über die Finger 2 in einen Verwendungszustand gebracht werden. Nach Verwendung kann der Düsenkörper 1 abgezogen und entsorgt werden. Eine Reinigung der Aktorik kann entfallen, da die Aktorik während der Verwendung der Vorrichtung nicht in Kontakt mit dem Material kommt.

In anderen Ausführgen kann alternativ oder zusätzlich auch eine Befestigung über Spannbänder und/oder nach dem Prinzip eines Seegerrings und/oder durch Klemmleisten vorgesehen sein.

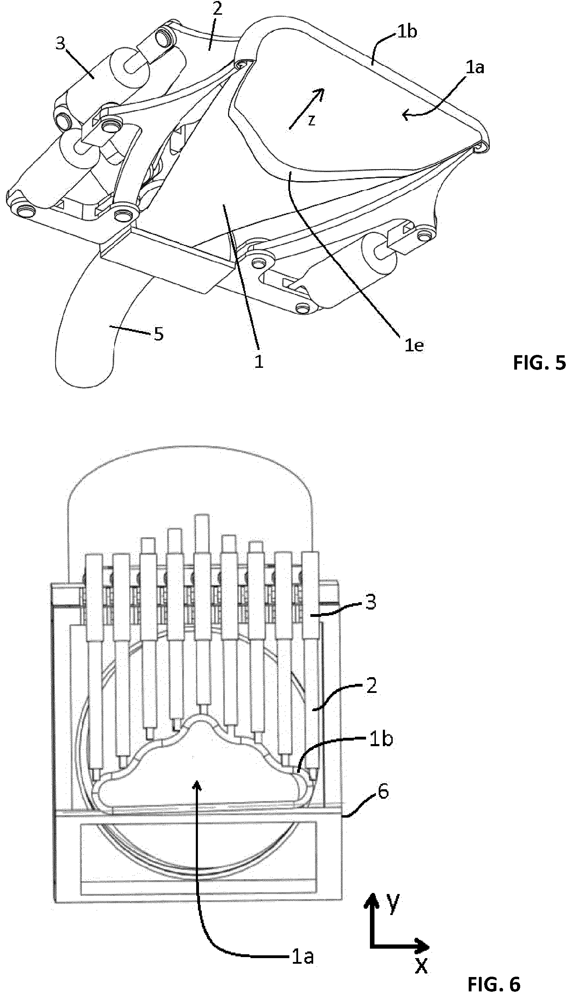

Figur 5 zeigt eine gegenüber den Figuren 1 bis 3 modifiziert Ausgestaltung der Vorrichtung. Ein dem oberen Umrandungsabschnitt abgewandter unterer Umrandungsabschnitt ist eingeschnitten und dadurch gegenüber dem oberen Umrandungsabschnitt zurückgesetzt. Dadurch ist der Düsenkörper an der Austrittsöffnung 1a auch nach unten geöffnet. Das heißt, die Austrittsöffnung 1a ist entsprechend vergrößert. Dadurch kann bei der Materialapplikation ein Anpressdruck auf die Materialraupe ausgeübt werden. Ein Abschnitt des Düsenkörpers bzw. der Vorrichtung liegt bei ihrer Verwendung noch über der Materialraupe, wenn diese aufgrund der Öffnung nach unten bereits Kontakt mit der Applikationsfläche hat. So kann die Anhaftung auf die zu applizierende Fläche erhöht werden. Dies kann insbesondere bei geneigten Applikationsflächen von Bedeutung sein.

Die Anordnung der Aktorik entspricht derjenigen, die in Figuren 1 bis 3 gezeigt ist. Auch bei der Ausgestaltung aus Figur 5 ist der Querschnitt der Austrittsöffnung 1a durch Verformung des oberen Umrandungsabschnitts mittels der Aktorik einstellbar ist. Auch hier können insbesondere die zuvor gezeigten symmetrischen oder asymmetrischen Dreieckgeometrien erreicht werden.

Der Einschnitt stellt eine Erweiterung der Austrittsöffnung in negative z-Richtung dar, wenn man das in Figur 1 festgelegte Achsensystem zugrunde legt. Ein umgebogener Bereich, der dort bereitgestellt wird, wo der Düsenkörper nicht eingeschnitten bzw. zurückgesetzt ist, liegt in der x-y-Ebene.

Ein den Einschnitt begrenzender Abschnitt 1e der Umrandung 1b der Austrittsöffnung 1a, der an der Unterseite des Düsenkörpers 1 liegt, ist flexibel und frei verformbar, um, wie auch im Zusammenhang mit den Figuren 1 bis 3 beschrieben, ein Anpassen des Düsenkörpers 1 an die Form der Applikationsfläche unter Anpressdruck zu ermöglichen.

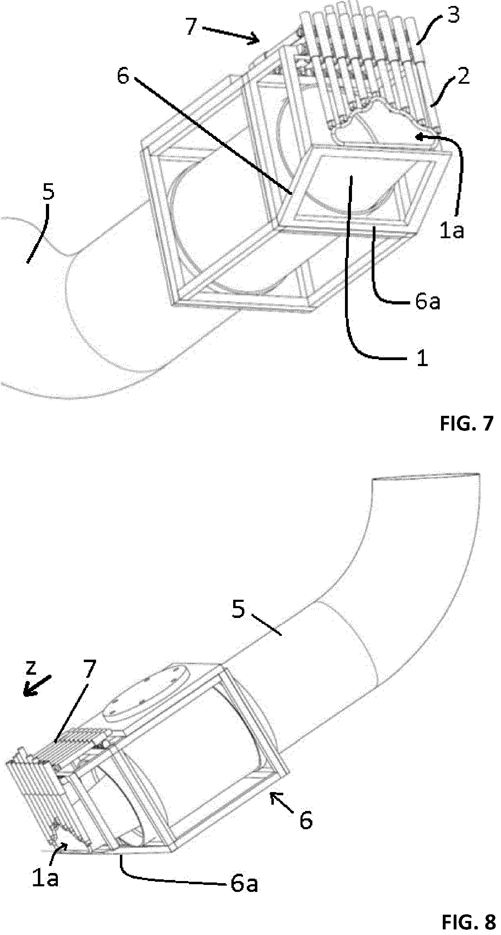

Figuren 6 bis 8 zeigen eine weitere modifizierte Ausgestaltung der vorgestellten Vorrichtung. Figur 6 zeigt eine Ansicht von vorne auf die Austrittsöffnung, die in der x-y-Ebene liegt. Figuren 7 und 8 zeigen Schrägansichten von schräg unten bzw. schräg seitlich.

In der gezeigten Ausgestaltung ist um den Düsenkörper 1 eine Rahmenstruktur 6 angeordnet. Die Aktorik ist an der Rahmenstruktur 6 befestigt, wobei die Finger 2 in der durch die Austrittsöffnung 1a definierten Ebene verlaufen und durch die Aktorik linear innerhalb dieser Ebene bewegbar sind.

Die Aktorik ist dabei schwenkbar an der Rahmenstruktur befestigt, und die Vorrichtung weist eine weitere Aktorik 7 als Kippaktorik zur Winkelverstellung auf. Diese greift an der Aktorik zur Veränderung des Querschnitts der Austrittsöffnung 1a an. Sie umfasst ihrerseits weitere linear verstellbare Finger mit dazugehörigen Aktoriken. Die Kippaktorik kann ein Schwenken der Aktorik zur Veränderung des Querschnitts der Austrittsöffnung 1a bewirken, wodurch die Austrittsöffnung 1a mit gekippt wird. Über die weitere Aktorik 7 kann also eine Winkeländerung des Austrittsquerschnittes hervorgerufen werden. Das ermöglicht es, den Winkel, in dem die Materialraupe relativ zu der Applikationsfläche austritt, zu verändern. Wenn der Winkel der Austrittsöffnung 1a auf diese Weise verändert wird, wird der Düsenkörpers 1 verformt und die Austrittsöffnung wird insbesondere gegenüber einer durch ihren Querschnitt in relaxiertem Zustand definierten Ebene gekippt.

Die Finger 2 der Aktorik zur Veränderung des Querschnitts der Austrittsöffnung 1a greifen dabei an dem oberen Umrandungsabschnitt an, während der untere Umrandungsabschnitt an der Rahmenstruktur 6 befestigt ist, so dass für ihn eine gerade Form fest vorgegeben ist. Eine Verbindungslinie, entlang derer der untere Umrandungsabschnitt mit der Rahmenstruktur verbunden ist, stellt dabei eine Rotationsachse für die Kippbewegung dar, die für die Austrittsöffnung 1a durch die zweite Aktorik 7 bewirkt werden kann.

Eine Seite der Rahmenstruktur 6 stellt eine Basisfläche 6a dar, die bei Verwendung der Vorrichtung unten liegt (vgl. Fig. 8) und so der Applikationsfläche zugewandt ist. Die Basisfläche 6a kann in manchen Ausführungen des Verfahrens Kontakt zu der Applikationsfläche haben oder in einem Abstand zur Applikationsfläche an ihr entlang geführt werden und beispielsweise parallel zur Applikationsfläche gehalten werden kann. Die Austrittsöffnung weist 1a dabei in neutralem Zustand eine Neigung in Richtung der Applikationsfläche auf, so dass das austretende Material in Richtung der Applikationsfläche austritt, wobei die Neigung durch die Kippaktorik 7 noch verstärkt werden kann. So besteht auch hier die Möglichkeit, das austretende Material von oben noch zusätzlich an die Applikationsfläche anzudrücken.

Der Querschnitt der Austrittsöffnung 1a ist auch im Beispiel der Figuren 6 bis 9 wieder durch Verformung des oberen Umrandungsabschnitts mittels der Aktorik einstellbar. Die Vorrichtung ist auch hier wieder dafür eingerichtet, insbesondere symmetrische oder asymmetrische Dreiecksformen anzunehmen. Im Beispiel der Figuren 6 bis 9 werden für die Aktorik neun Finger 2 bereitgestellt um eine präzise Anpassung und genaue Kontrolle der Geometrie der Austrittsöffnung zu bewirken.

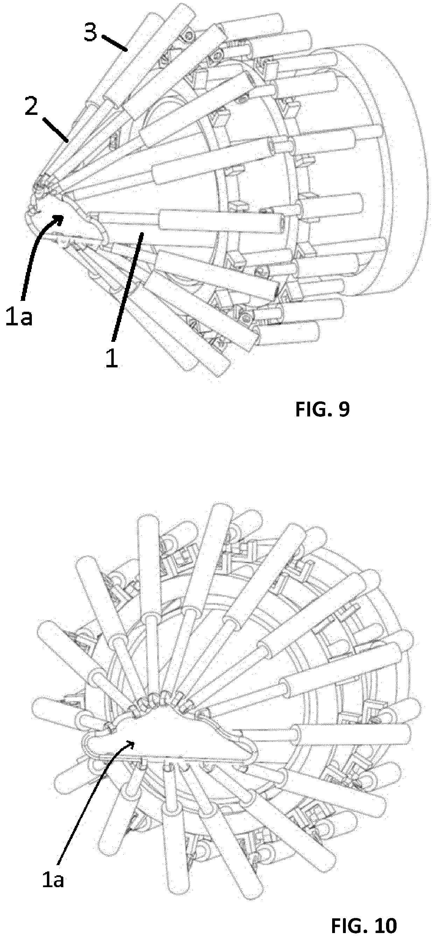

Figuren 9 und 10 zeigen eine weitere Ausgestaltung der Vorrichtung wobei die Aktorik an der Außenseite des Düsenkörpers 1 rotationssymmetrisch angeordnet ist. Dabei sind 15 Finger 2 in regelmäßigem Abstand um die Austrittsöffnung 1a angeordnet. Die Finger 2 sind dabei schräg zur Ebene der Austrittsöffnung 1a angeordnet und ermöglichen auf diese Weise eine Änderung der Geometrie der Austrittsöffnung sowie ein Kippen der Austrittsöffnung. Die Stelleinheiten 3 ermöglichen die lineare Verstellung der Finger und sind ihrerseits mittels einer weiteren Aktorik schwenkbar, so dass die Freiheitsgrade noch erhöht sind. Kippaktorik und Aktorik zum Verstellen des Querschnitts wechselwirken miteinander und sind nicht voneinander zu trennen. Die Aktorik ist somit gleichzeitigt als Kippaktorik und Aktorik zum Verstellen des Querschnitts der Austrittsöffnung ausgebildet.

Die Finger 2 sind auch hier wieder an der Umrandung 1b der Austrittsöffnung 1a mit dem Düsenkörper verbunden, durch Überstülpen eines umgebogenen Bereichs des Düsenkörpers 1.

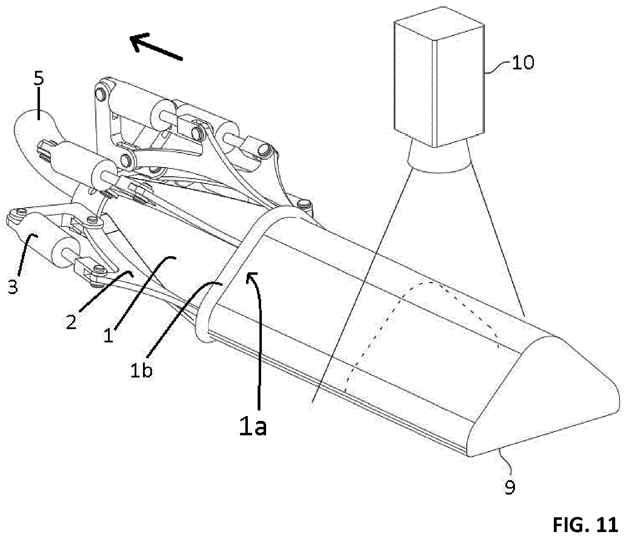

Anhand von Figur 11 sollen Aspekte des Verfahrens zur Verwendung der Vorrichtung noch weiter verdeutlicht werden. Die Verfahrensaspekte sind dabei nicht auf die hier gezeigte Ausführung der Vorrichtung und des Düsenkörpers beschränkt, sondern lassen sich analog in Verbindung mit den anderen in dieser Anmeldung diskutierten Vorrichtungen und Düsenkörpern ausführen.

Durch den Zuführschlauch 5, der mit der Zuführöffnung verbunden ist, wird ein Material für die Materialraupe 9 in den inneren Hohlraum geleitet und tritt dann an der gegenüberliegenden Seite aus der Austrittsöffnung 1a aus und bildet die Materialraupe 9. Dabei wird, während das Material aus der Austrittsöffnung 9 austritt, die Vorrichtung in Richtung des in der Figur gezeigten Pfeils an der Applikationsfläche entlang bewegt. Der Querschnitt der Austrittsöffnung 1a wird durch die Aktorik zum Verändern einer Kontur der Materialraupe 9 verändert, um die Geometrie der Materialraupe 9 zu verändern. In der Figur 11 ist eine dreieckige Form für die Materialraupe 9 gezeigt. Beispielsweise ist es möglich, die Form für die Materialraupe 9 zumindest abschnittsweise konstant zu halten und beispielsweise nach einer vorgegebenen Länge oder bei Erreichen eines vorgegebenen Orts auf der Applikationsfläche die Geometrie zu verändern. Das Bewegen entlang der Applikationsfläche und das Verändern der Geometrie der Austrittsöffnung kann dabei manuell oder automatisch, beispielsweise mit Hilfe eines Sechsachsroboters geschehen. Die Vorrichtung kann mit einem Abstand zur Applikationsfläche bewegt werden oder so, dass die Vorrichtung, insbesondere der Düsenkörper, mit der Unterseite die Applikationsfläche berührt.

In der Figur 11 ist gezeigt, dass die Vorrichtung ein Messsystem aufweist, welches einen Sensor 10 umfasst, der die Oberfläche der bereits applizierten Materialraupe 9 erfasst. Die aufgenommenen Messdaten können auf verschiedene Weise genutzt werden. Beispielsweise ist eine Speicherung der ermittelten Kontur zur Qualitätsüberwachung und Dokumentation möglich. Alternativ oder zusätzlich kann eine aktive Regelung der Vorrichtung über die Messdaten erfolgen. D.h. wenn die applizierte Materialraupe die gewünschte Kontur verlässt, können die Finger 2 verstellt und die Geometrie verkleinert oder vergrößert werden. In einer Ausführung des Verfahrens ist auch eine Positionierung der Auftragseinheit im Raum unter Zuhilfenahme von Sensorwerten möglich, um eine exakte Positionierung der applizierten Materialraupe auf dem Werkstück sicherzustellen.

In dem Verfahren werden beispielsweise zwischen 3 kg und 20 kg Material pro Minute appliziert. Eine Breite der Materialraupe 9 kann beispielsweise zwischen 50 mm und 200 mm betragen.

Es kann vorgesehen sein, dass eine oder mehrere Materialraupen 9 unter Verwendung desselben Düsenkörpers 1 hergestellt werden und die eine oder die mehreren Materialraupen 9 ein kombiniertes Gewicht von zwischen 800 kg und 3000 kg haben. Dabei kann es vorgesehen sein, dass der Düsenkörper 1 nach dem Erstellen dieser einen oder der mehreren Materialraupen 9 entsorgt wird, so dass eine Reinigung des Düsenkörpers 1 entfallen kann.

Die Applikationsfläche kann beispielsweise eine Fläche einer Windenergieanlagenkomponente, etwa vorzugsweise eines Windenergieanlagenrotorblatts, sein.

Figuren 12 und 13 zeigen eine Konfiguration des Düsenkörpers 1, der in den gezeigten Vorrichtungen eingesetzt werden kann.

Bei dem Düsenkörper 1 handelt es sich um einen einstückigen, additiv gefertigten Körper, der den inneren Hohlraum aufweist und sich von der Austrittsöffnung 1a hin zur Zuführöffnung 1d verjüngt. In Figur 12 ist die Austrittsöffnung 1a und in Figur 13 die Zuführöffnung 1d erkennbar.

Der Düsenkörper 1 wird dabei inklusive dem umgebogenen Bereich additiv gefertigt. Wenn ein zurückgesetzter unterer Umrandungsabschnitt oder ein Einschnitt vorgesehen ist (vgl. Figur 5), so wird der Düsenkörper 1 beispielsweise gleich mit dem zurückgesetzten Umrandungsabschnitt bzw. Einschnitt additiv hergestellt.

An dem Ende der Zuführöffnung 1d formt der Düsenkörper einen rohrförmigen Stutzen, der eine Anschlussmöglichkeit für den Zuführschlauch darstellt.

Eine Wandstärke des Düsenkörpers 1 kann räumlich konstant sein oder variieren. Beispielsweise kann die Wandstärke im Bereich des Stutzens erhöht sein.

Der Düsenkörper 1 ist aus einem hochflexiblen gummiartigen Kunststoff, beispielsweise aus der Tango-Familie oder aus der Agilus30-Familie von Stratasys Ltd., gefertigt und weist einen Shore-Härtegrad von zwischen 10 und 95 oder von zwischen 27 und 95 auf. Die Shore-Härte des Düsenkörpers 1 kann lokal variieren, um beispielsweise an der Austrittsöffnung 1a eine gute Verformbarkeit zu erreichen und ein Verformen des Stutzens 1c zu verhindern, um beispielsweise ein Abgleiten des Zuführschlauchs 5 zu vermeiden.

Der Düsenkörper 1 ist für den einmaligen Gebrauch vorgesehen.

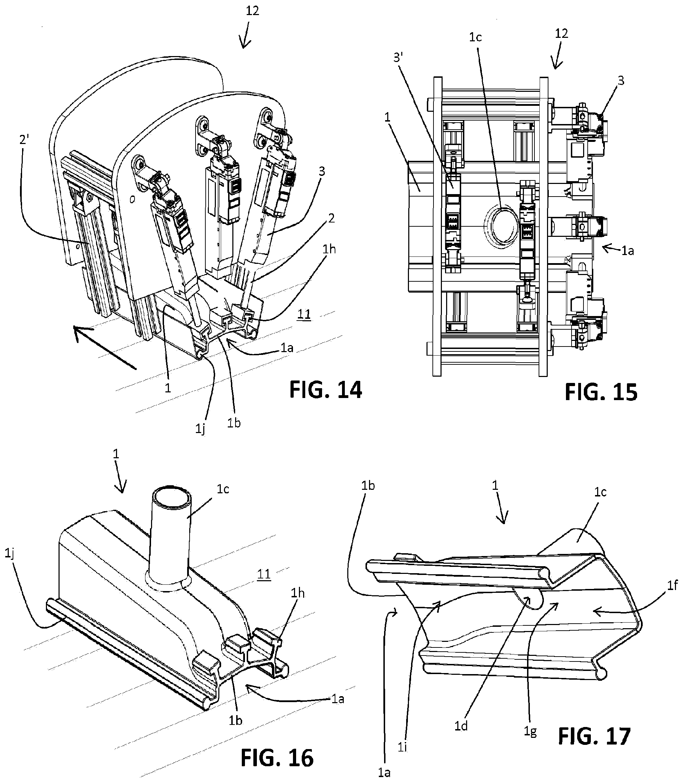

Figuren 14 bis 17 beziehen sich auf eine weitere Ausgestaltung der Vorrichtung zum Auftragen einer Materialraupe.

Figuren 14 und 15 zeigen die Vorrichtung, wobei eine Tragstruktur mit dem Düsenkörper verbunden ist, in einer Schrägansicht und in einer Ansicht von oben, und Figuren 16 und 17 zeigen zur besseren Übersichtlichkeit nochmals den Düsenkörper ohne die Tragstruktur. Bezüglich der Eigenschaften des Düsenkörpers wird somit auf alle vier Figuren gleichzeitig Bezug genommen. Figur 16 zeigt dabei eine Schrägansicht des Düsenkörpers und Figur 17 eine Ansicht von unten, in der ein Inneres des Düsenkörpers sichtbar ist.

Die in den Fign. 14 bis 17 gezeigte Vorrichtung zum Auftragen einer Materialraupe 9 umfasst also den flexiblen Düsenkörper 1, der ein von einem Material für die Materialraupe 9 durchströmbares Volumen definiert, das zumindest teilweise von einer durch den Düsenkörper 1 ausgebildeten Umwandung begrenzt ist. Eine Zuführöffnung zum Zuführen des Materials mündet in das durchströmbare Volumen (vgl. Fig. 17). Zum Verbinden der Zuführöffnung 1d mit dem Zuführschlauch 5 für das Material ist ein Stutzen 1c vorgesehen. Der Düsenkörper 1 definiert einen Mündungsbereich 1a, durch den das Material aus dem Volumen austreten kann. Eine Schrägansicht auf den Mündungsbereich ist in Figuren 14 und 16 dargestellt. Das durchströmbare Volumen 1i ist als nach unten und im Mündungsbereich 1a geöffnetes halboffenes Volumen ausgebildet ist, das oben und an zwei gegenüberliegenden Seiten von der durch den Düsenkörper 1 ausgebildeten Umwandung begrenzt ist.

Bei der Verwendung der Vorrichtung gemäß Fign. 14 bis 17 wird diese auf eine Applikationsfläche 11 aufgelegt. Die vorgesehene Anordnung des Düsenkörpers relativ zur Applikationsfläche ist in Figuren 14 und 16 beispielhaft dargestellt. Die Applikationsfläche 11 schließt das Halboffene Volumen unten ab und begrenzt auch die Austrittsöffnung 1a, die ansonsten von einer Umrandung 1b des Mündungsbereichs umrundet ist. Der unter der Vorrichtung eingezeichnete Pfeil stellt die Bewegungsrichtung während der Applikation dar. Über die Zuführöffnung wird Material in das von Düsenkörper und Applikationsfläche begrenzte Volumen geleitet, welches dann durch die Austrittsöffnung 1a austritt und die standfeste Materialraupe bildet, deren Kontur durch die Austrittsöffnung 1a definiert ist.

Eine Aktorik 3, 3', die an dem Düsenkörper angeordnet ist, ist dafür eingerichtet ist, einen Querschnitt des Mündungsbereichs unter Verformung des Düsenkörpers zu verändern. Die Umwandung bildet dabei eine Barriere zwischen dem durchströmbaren Volumen und der Aktorik.

Figuren 14 und 15 zeigen dabei eine Tragstruktur 12 mit als Linearaktoren ausgebildeten Stelleinheiten 3 zur Verstellung des flexiblen Düsenkörpers. Verschiedene Profilquerschnitte der Materialraupe werden unter Verformung der Umrandung 1b einerseits durch die drei vertikal angeordneten Linearaktoren 3 eingestellt. Der Materialraupe kann also ein veränderliches Profil gegeben werden, wenn sie den zwischen Düsenkörper und Applikationsfläche gebildeten Hohlraum durch die derart in ihrer Form veränderte Austrittsöffnung 1a verlässt. Die Linearaktoren 3 sind über bewegliche Finger 2 mit Haltestrukturen 1h des Düsenkörpers formschlüssig verbunden. Diese Haltestrukturen 1h befinden sich auf der Außenseite des Düsenkörpers an der Umrandung 1b des Mündungsbereichs bzw. der Austrittsöffnung.

Weiterhin umfasst der Düsenkörper seitliche Haltestrukturen 1j. Diese sind ebenfalls mit der Tragstruktur 12 verbunden und ermöglichen ein Andrücken des Düsenkörpers an die Applikationsfläche 11. Diese seitlichen Haltestrukturen 1j sind am unteren Ende der Seiten der Umwandung bereitgestellt und dort als nach außen gebogene Abschnitte mit runden Wulsten ausgeführt, die einen Formschluss mit dazu komplementären Strukturen der Tragstruktur 12 ermöglichen. Sie erstrecken sich über eine gesamte Länge des Düsenkörpers 1. Die mit der Tragstruktur verbundenen seitlichen Haltestrukturen 1j ermöglichen eine Fixierung der Breite des Düsenkörpers 1, wenn dieser unter dem Druck des durchströmenden Materials steht und/oder durch die oben angeordnete Aktorik 3 verformt wird, sowie ein Andrücken des Düsenkörpers an die Applikationsfläche 11, wodurch verhindert werden kann, dass Material ungewollt an der Seite austritt. Die seitlichen Haltestrukturen sind ebenfalls über eine Aktorik mit der Tragstruktur verbunden. Diese den seitlichen Haltestrukturen 1j zugeordnete Aktorik ermöglicht insbesondere eine Verbreiterung des Düsenkörpers und somit auch des Querschnitts des Mündungsbereichs und also der Austrittsöffnung. Dafür sind in der Tragstruktur 12 weitere als Linearaktoren ausgebildete Stelleinheiten 3' vorgesehen, die in der Draufsicht in Figur 15 sichtbar sind. Diese übertragen über die als quadratische Profile ausgebildeten Finger 2' eine Kraft auf eine Kederschiene und schließlich auf den runden Wulst des flexiblen Düsenkörpers und dienen also auch zum Einstellen des Profilquerschnitts der Materialraupe 9.

Die in Figur 17 dargestellte Ansicht von unten ermöglicht den Blick ins Innere des unten geöffneten Düsenkörpers. Dabei ist eine Schrägansicht auf eine dem Mündungsbereich 1a abgewandte Stirnseite gezeigt, die bei Verwendung der Vorrichtung vorne ist. Dort befindet sich eine Stirnseitige Öffnung 1f, das heißt, das vom Düsenkörper 1 definierte Volumen ist an drei Seiten geöffnet: nämlich erstens unten, wo das Volumen bei Verwendung von der Applikationsfläche begrenzt wird, zweitens mündungsseitig, wo der Mündungsbereich und somit die Austrittsöffnung 1a bereitgestellt wird, und drittens stirnseitig, um die Druckverhältnisse im Volumen des Düsenkörpers während der Verwendung zu begünstigen.

In Figur 17 ist erkennbar, dass die Zuführöffnung 1d oben ungefähr mittig in das Volumen des Düsenkörpers mündet. Mündungsseitig davon erstreckt sich das vom Material für die Materialraupe 9 durchströmbare Volumen 1i. Stirnseitig davon erstreckt sich ein Puffervolumen 1g. Dadurch kann eine optimale Füllung des durchströmbaren Bereichs des Düsenkörpers gewährleistet werden. Differenzen aus Materialzufürung und Materialaustritt, die etwa bei nicht-konstanten Vorschubgeschwindigkeiten, insbesondere bei händischer Führung, vorkommen können, können ausgeglichen werden, indem Material in das Puffervolumen strömen kann oder aus dem Puffervolumen zurück in das durchströmbare Volumen. Das Puffervolumen weist dafür einen größeren Querschnitt auf als das durchströmbare Volumen.

Der Düsenkörper ist aus hochelastischem Silikon gefertigt und erlaubt eine simultane Vergrößerung des Querschnitts des Mündungsbereichs um mehr als 100 % in Breite und Höhe.

Die Erfindung ist durch die Ansprüche definiert.

### Bezugszeichenliste

- 1: Düsenkörper
- 1a: Austrittsöffnung / Mündungsbereich
- 1b: Umrandung der Austrittsöffnung / des Mündungsbereichs
- 1c: Stutzen
- 1d: Zuführöffnung zum Zuführen eines Materials
- 1e: Einschnitt begrenzender Abschnitt der Umrandung 1b
- 1f: Stirnseitige Öffnung
- 1g: Puffervolumen
- 1h: Haltestruktur
- 1i: Durchströmbares Volumen
- 1j: seitliche Haltestruktur

- 2, 2': Finger
- 3, 3': Stelleinheiten
- 4: Halterung
- 5: Zuführschlauch

- 6: Rahmenstruktur
- 6a: Basisfläche

- 7: Weitere Aktorik als Kippaktorik zur Winkelverstellung

- 9: Materialraupe
- 10: Sensor

- 11: Applikationsfläche

- 12: Tragstruktur

## Patentansprüche

1. Vorrichtung zum Auftragen einer Materialraupe (9), umfassend
- einen flexiblen Düsenkörper (1) der ein von einem Material für die Materialraupe (9) durchströmbares Volumen definiert, das zumindest teilweise von einer durch den Düsenkörper (1) ausgebildeten Umwandung begrenzt ist, mit einer Zuführöffnung zum Zuführen des Materials in das durchströmbare Volumen, wobei der Düsenkörper (1) einen Mündungsbereich (1a) definiert, durch den das Material aus dem Volumen austreten kann,
- eine Aktorik, die an dem Düsenkörper (1) angeordnet ist und die dafür eingerichtet ist, einen Querschnitt des Mündungsbereichs (1a) unter Verformung des Düsenkörpers (1) zu verändern,
wobei die Umwandung eine Barriere zwischen dem durchströmbaren Volumen und der Aktorik bildet **dadurch gekennzeichnet dass**, das durchströmbare Volumen als nach unten im Gebrauchszustand und im Mündungsbereich geöffnetes halboffenes Volumen ausgebildet ist, das zumindest oben und an zwei gegenüberliegenden Seiten von der durch den Düsenkörper ausgebildeten Umwandung begrenzt ist.

2. Vorrichtung gemäß Anspruch 1, wobei die Aktorik mindestens einen Finger (2) umfasst, der durch eine Stelleinheit (3) bewegbar ist und an einer Umrandung (1b) des Mündungsbereichs, insbesondere der Austrittsöffnung (1a), oder in der Nähe der Umrandung (1b) des Mündungsbereichs, insbesondere der Austrittsöffnung (1a), an dem Düsenkörper (1) befestigt ist
und/oder
wobei der Düsenkörper (1) im Bereich der Umrandung (1b) des Mündungsbereichs, insbesondere der Austrittsöffnung (1a), einen nach außen umgebogenen Abschnitt aufweist und/oder wobei der Düsenkörper (1) im Bereich der Umrandung (1b) des Mündungsbereichs, insbesondere der Austrittsöffnung, Haltestrukturen aufweist.

3. Vorrichtung gemäß einem der vorhergehenden Ansprüche, wobei die Aktorik an einer Außenseite des Düsenkörpers (1) angeordnet ist und/oder wobei die Aktorik für den Düsenkörper (1) eine formgebende Außenstruktur mit veränderlicher Form bildet, gegen die der Düsenkörper (1) unter Förderdruck drückbar ist.

4. Vorrichtung gemäß einem der vorhergehenden Ansprüche,
- wobei die Aktorik formschlüssig mit dem Düsenkörper (1) verbunden ist;
und/oder
- wobei der nach außen umgebogene Bereich des Düsenkörpers (1) zur Befestigung an der Aktorik über die Aktorik gestülpt ist und/oder an der Aktorik hintergehakt ist
oder
wobei die Haltestrukturen mit komplementären Strukturen der Aktorik verbunden sind.

5. Vorrichtung gemäß einem der vorhergehenden Ansprüche, eine Kippaktorik umfassend, die dafür eingerichtet ist, den Mündungsbereich oder die Austrittsöffnung (1a) des Düsenkörpers (1) gegenüber einer durch seinen/ihren Querschnitt in relaxiertem Zustand definierten Ebene unter Verformung des Düsenkörpers (1) zu kippen.

6. Vorrichtung gemäß Anspruch 5, wobei die Kippaktorik durch die Aktorik zum Verändern des Querschnitts des Mündungsbereichs oder der Austrittsöffnung (1a) des Düsenkörpers (1) ausgebildet ist oder wobei die Kippaktorik zusätzlich zu der Aktorik zum Verändern des Querschnitts des Mündungsbereichs oder der Austrittsöffnung (1a) des Düsenkörpers (1) als weitere Aktorik (7) bereitgestellt ist.

7. Vorrichtung gemäß einem der vorhergehenden Ansprüche, wobei der Düsenkörper auf einer dem Mündungsbereich gegenüberliegenden Stirnseite geöffnet ist und/oder wobei der Düsenkörper ein Puffervolumen ausbildet.

8. Vorrichtung gemäß einem der vorhergehenden Ansprüche, wobei die Aktorik zum Verändern des Querschnitts der Austrittsöffnung (1a) des Düsenkörpers (1) mindestens 2, vorzugsweise mindestens 3, besonders bevorzugt mindestens 5 und/oder höchstens 20 Finger, bevorzugt höchstens 15 Finger umfasst.

9. Vorrichtung gemäß einem der vorhergehenden Ansprüche, wobei der Düsenkörper als Wegwerfprodukt zur einmaligen Verwendung ausgebildet ist und/oder wobei der Düsenkörper (1) einstückig ausgebildet und/oder additiv gefertigt ist.

10. Vorrichtung gemäß einem der vorhergehenden Ansprüche, wobei der Düsenkörper (1) aus einem hochflexiblen Kunststoff und/oder aus einem hochelastischen Silikon gefertigt ist und/oder eine räumlich variierende Shore-Härte aufweist
und/oder
wobei der Düsenkörpers eine Vergrößerung der Breite und/oder der Höhe des Querschnitts des Mündungsbereichs um mindestens 50 %, vorzugsweise um mindestens 80 %, besonders bevorzugt um mindestens 90 % im Vergleich zum relaxierten Zustand des Mündungsbereichs erlaubt.

11. Vorrichtung gemäß einem der vorhergehenden Ansprüche, weiterhin einen Sensor (10) zum Erfassen einer Kontur der Materialraupe (9) umfassend, wobei die Vorrichtung vorzugsweise eine Regelungseinrichtung aufweist, die die Aktorik basierend auf von dem Sensor (10) erfassten Werten steuert.

12. Verfahren zur Verwendung der Vorrichtung gemäß einem der vorhergehenden Ansprüche, wobei ein zähflüssiges Material verwendet wird, um eine standfeste Materialraupe herzustellen, deren Kontur durch den Querschnitt des Mündungsbereichs, insbesondere der Austrittsöffnung, definiert ist.

13. Verfahren, insbesondere gemäß Anspruch 12, zur Verwendung der Vorrichtung gemäß einem der Ansprüche 1 bis 11, wobei die Vorrichtung auf eine Applikationsfläche aufgelegt wird, so dass die Applikationsfläche das durchströmbare Volumen nach unten begrenzt um einen Hohlraum zu bilden mit einer Austrittsöffnung, die durch den Mündungsbereich und die Applikationsfläche definiert wird,
weiterhin die Schritte umfassend:
Zuführen eines Materials für die Materialraupe (9) durch die Zuführöffnung in den Hohlraum, so dass das Material aus der Austrittsöffnung (1a) austritt und, während das Material aus der Austrittsöffnung (1a) austritt,
- Bewegen der Vorrichtung entlang einer Applikationsfläche, so dass durch das austretende Material die Materialraupe (9) auf der Applikationsfläche gebildet wird,
- Verändern des Querschnitts des Mündungsbereichs durch die Aktorik zum Verändern einer Kontur der Materialraupe (9).

14. Verfahren gemäß einem der Ansprüche 12 oder 13, wobei mindestens 100g, vorzugsweise mindestens 1 kg, besonders bevorzugt mindestens 3 kg und/oder höchstens 25 kg, vorzugsweise höchstens 20 kg Material pro Minute appliziert werden und/oder wobei die Materialraupe eine Breite von mindestens 20 mm, vorzugsweise mindestens 30 mm, besonders bevorzugt mindestens 50 mm und/oder höchstens 400 mm, bevorzugt höchstens 300 mm, besonders bevorzugt höchstens 200 mm hat.

15. Verfahren gemäß einem der Ansprüche 12 bis 14, wobei eine oder mehrere Materialraupen (9) unter Verwendung desselben Düsenkörpers (1) hergestellt werden und die eine oder die mehreren Materialraupen (9) ein kombiniertes Gewicht von mindestens 100 kg, vorzugsweise mindestens 500 kg, besonders bevorzugt mindestens 800 kg und/oder höchstens 3000 kg haben und/oder wobei die Applikationsfläche eine Fläche einer Windenergieanlagenkomponente, vorzugsweise eines Windenergieanlagenrotorblatts, ist.

## Claims

1. A device for applying a bead of material (9), comprising
- a flexible nozzle body (1), which defines a volume through which a material for the bead of material (9) can flow and which is at least partially delimited by a wall formed by the nozzle body (1), comprising a feed opening for feeding the material into the flow-through volume, wherein the nozzle body (1) defines a mouth region (1a) through which the material can exit the volume,
- an actuator system, which is arranged at the nozzle body (1) and is configured to modify a cross section of the mouth region (1a) while deforming the nozzle body (1),
wherein the wall forms a barrier between the flow-through volume and the actuator system, **characterized in that** the flow-through volume is configured as a semi-open volume which is open at the bottom in the usage state and in the mouth region and is delimited at least at the top and on two opposite sides by the wall formed by the nozzle body.

2. The device according to claim 1, wherein the actuator system comprises at least one finger (2), which can be moved by an actuating unit (3) and is fastened to the nozzle body (1) at a border (1b) of the mouth region, in particular the outlet opening (1a), or in the vicinity of the border (1b) of the mouth region, in particular the outlet opening (1a),
and/or
wherein the nozzle body (1) comprises an outwardly curved portion in the region of the border (1b) of the mouth region, in particular the outlet opening (1a), and/or wherein the nozzle body (1) comprises holding structures in the region of the border (1b) of the mouth region, in particular the outlet opening.

3. The device according to any one of the preceding claims, wherein the actuator system is arranged on an outer face of the nozzle body (1) and/or wherein, for the nozzle body (1), the actuator system forms a shaping outer structure having a variable shape, against which the nozzle body (1) can be pressed under conveying pressure.

4. The device according to any one of the preceding claims,
- wherein the actuator system is connected to the nozzle body (1) in a form-fitting manner;
and/or
- wherein the outwardly curved region of the nozzle body (1) is put over the actuator system for fastening to the actuator system and/or is hooked behind the actuator system
or
wherein the holding structures are connected to complementary structures of the actuator system.

5. The device according to any one of the preceding claims, comprising a tilt actuator system which is set up to tilt the mouth region or the outlet opening (1a) of the nozzle body (1) with respect to a plane defined by its cross section in the relaxed state while deforming the nozzle body (1).

6. The device according to claim 5, wherein the tilt actuator system is formed by the actuator system for modifying the cross section of the mouth region or the outlet opening (1a) of the nozzle body (1) or wherein the tilt actuator system is provided as a further actuator system (7) in addition to the actuator system for modifying the cross section of the mouth region or the outlet opening (1a) of the nozzle body (1).

7. The device according to any one of the preceding claims, wherein the nozzle body is open on an end face opposite the mouth region and/or wherein the nozzle body forms a buffer volume.

8. The device according to any one of the preceding claims, wherein the actuator system for changing the cross section of the outlet opening (1a) of the nozzle body (1) comprises at least 2, preferably at least 3, particularly preferably at least 5 and/or at most 20 fingers, preferably at most 15 fingers.

9. The device according to any one of the preceding claims, wherein the nozzle body is designed as a disposable product for single use and/or wherein the nozzle body (1) is formed in one piece and/or is additively manufactured.

10. The device according to any one of the preceding claims, wherein the nozzle body (1) is made of a highly flexible plastics material and/or of a highly resilient silicone and/or has a spatially varying Shore hardness
and/or
the nozzle body allows for an increase in the width and/or the height of the cross section of the mouth region by at least 50%, preferably by at least 80%, particularly preferably by at least 90%, in comparison with the relaxed state of the mouth region.

11. The device according to any one of the preceding claims, further comprising a sensor (10) for detecting a contour of the bead of material (9), wherein the device preferably has a regulating device which controls the actuator system based on values detected by the sensor (10).

12. A method for using the device according to any one of the preceding claims, wherein a viscous material is used to produce a stable bead of material, the contour of which is defined by the cross section of the mouth region, particularly the outlet opening.

13. The method, in particular according to claim 12, for using the device according to any one of claims 1 to 11, wherein the device is placed onto an application surface such that the application surface delimits the flow-through volume at the bottom in order to form a cavity comprising an outlet opening, which is defined by the mouth region and the application surface,
further comprising the steps of:
feeding a material for the bead of material (9) through the feed opening in the cavity such that the material exits from the outlet opening (1a) and, while the material exits from the outlet opening (1a),
- moving the device along an application surface, such that the bead of material (9) is formed on the application surface by the exiting material,
- modifying the cross section of the mouth region by means of the actuator system for modifying a contour of the bead of material (9).

14. The method according to any one of claims 12 or 13, wherein at least 100 g, preferably at least 1 kg, particularly preferably at least 3 kg, and/or at most 25 kg, preferably at most 20 kg material, is applied per minute, and/or wherein the bead of material has a width of at least 20 mm, preferably at least 30 mm, particularly preferably at least 50 mm, and/or at most 400 mm, preferably at most 300 mm, particularly preferably at most 200 mm.

15. The method according to any one of claims 12 to 14, wherein one or more beads of material (9) are produced using the same nozzle body (1) and the one or more beads of material (9) have a combined weight of at least 100 kg, preferably at least 500 kg, particularly preferably at least 800 kg, and/or at most 3000 kg, and/or wherein the application surface is a surface of a wind turbine component, preferably of a wind turbine rotor blade.

## Revendications

1. Dispositif d'application d'un cordon de matériau (9), comprenant
- un corps de buse flexible (1) qui définit un volume pouvant être traversé par un matériau destiné au cordon de matériau (9), lequel volume est au moins partiellement délimité par une paroi formée par le corps de buse (1), avec un orifice d'alimentation permettant d'alimenter le matériau dans le volume pouvant être traversé, dans lequel le corps de buse (1) définit une région de bouche (1a) à travers laquelle le matériau peut sortir du volume,
- un actionneur, qui est agencé au niveau du corps de buse (1) et qui est conçu pour modifier une section transversale de la région de bouche (1a) par déformation du corps de buse (1),
dans lequel la paroi forme une barrière entre le volume pouvant être traversé et l'actionneur, **caractérisé en ce que** le volume pouvant être traversé est réalisé sous la forme d'un volume semi-ouvert qui est ouvert vers le bas dans l'état d'utilisation et dans la région de bouche et qui est délimité au moins en haut et sur deux côtés opposés par la paroi formée par le corps de buse.

2. Dispositif selon la revendication 1, dans lequel l'actionneur comprend au moins un doigt (2) qui peut être déplacé grâce à une unité d'ajustement (3) et est fixé au corps de buse (1) au niveau d'un bord (1b) de la région de bouche, en particulier de l'orifice de sortie (1a), ou à proximité du bord (1b) de la région de bouche, en particulier de l'orifice de sortie (1a)
et/ou
dans lequel le corps de buse (1) présente une section courbée vers l'extérieur dans la région du bord (1b) de la région de bouche, en particulier de l'orifice de sortie (1a), et/ou dans lequel le corps de buse (1) présente des structures de retenue dans la région du bord (1b) de la région de bouche, en particulier de l'orifice de sortie.

3. Dispositif selon l'une quelconque des revendications précédentes, dans lequel l'actionneur est agencé sur un côté extérieur du corps de buse (1) et/ou dans lequel l'actionneur destiné au corps de buse (1) forme une structure extérieure de mise en forme présentant une forme variable et contre laquelle le corps de buse (1) peut être pressé sous une pression de transport.

4. Dispositif selon l'une quelconque des revendications précédentes,
- dans lequel l'actionneur est relié avec verrouillage par complémentarité de forme au corps de buse (1) ;
et/ou
- dans lequel la région courbée vers l'extérieur du corps de buse (1) est glissée sur l'actionneur et/ou est accrochée à l'actionneur afin d'être fixée à l'actionneur
ou
dans lequel les structures de retenue sont reliées à des structures complémentaires appartenant à l'actionneur.

5. Dispositif selon l'une quelconque des revendications précédentes, comprenant un actionneur d'inclinaison conçu pour incliner la région de bouche ou l'orifice de sortie (1a) du corps de buse (1) par rapport à un plan défini par sa section transversale à l'état détendu, ce qui déforme le corps de buse (1).

6. Dispositif selon la revendication 5, dans lequel l'actionneur d'inclinaison est formé par l'actionneur permettant de modifier la section transversale de la région de bouche ou de l'orifice de sortie (1a) du corps de buse (1) ou dans lequel l'actionneur d'inclinaison est fourni sous la forme d'un actionneur supplémentaire (7) en plus de l'actionneur permettant de modifier la section transversale de la région de bouche ou de l'orifice de sortie (1a) du corps de buse (1).

7. Dispositif selon l'une quelconque des revendications précédentes, dans lequel le corps de buse est ouvert sur une face d'extrémité opposée à la région de bouche et/ou dans lequel le corps de buse forme un volume tampon.

8. Dispositif selon l'une quelconque des revendications précédentes, dans lequel l'actionneur permettant de modifier la section transversale de l'orifice de sortie (1a) du corps de buse (1) comprend au moins 2, de manière préférée au moins 3, de manière particulièrement préférée au moins 5 et/ou au plus 20 doigts, de manière préférée au plus 15 doigts.

9. Dispositif selon l'une quelconque des revendications précédentes, dans lequel le corps de buse est réalisé sous la forme d'un produit jetable à usage unique et/ou dans lequel le corps de buse (1) est réalisé d'une seule pièce et/ou est fabriqué de manière additive.

10. Dispositif selon l'une quelconque des revendications précédentes, dans lequel le corps de buse (1) est fabriqué à partir d'un plastique hautement flexible et/ou d'un silicone hautement élastique et/ou présente une dureté Shore variable dans l'espace
et/ou
dans lequel le corps de buse permet une augmentation de la largeur et/ou de la hauteur de la section transversale de la région de bouche d'au moins 50 %, de manière préférée d'au moins 80 %, de manière particulièrement préférée d'au moins 90 % par rapport à l'état détendu de la région de bouche.

11. Dispositif selon l'une quelconque des revendications précédentes, comprenant en outre un capteur (10) permettant de détecter un contour du cordon de matériau (9), dans lequel le dispositif présente de manière préférée un dispositif de régulation qui commande l'actionneur en se basant sur des valeurs enregistrées par le capteur (10).

12. Procédé d'utilisation du dispositif selon l'une quelconque des revendications précédentes, dans lequel un matériau visqueux est utilisé pour produire un cordon de matériau stable dont le contour est défini par la section transversale de la région de bouche, en particulier de l'orifice de sortie.

13. Procédé, en particulier selon la revendication 12, permettant d'utiliser le dispositif selon l'une quelconque des revendications 1 à 11, dans lequel le dispositif est placé sur une surface d'application, de sorte que la surface d'application limite vers le bas le volume pouvant être traversé, afin de former une cavité avec un orifice de sortie qui est défini par la région de bouche et la surface d'application,
comprenant en outre les étapes consistant à :
alimenter un matériau destiné au cordon de matériau (9) à travers l'orifice d'alimentation dans la cavité de sorte que le matériau sort de l'orifice de sortie (1a) et, pendant que le matériau sort de l'orifice de sortie (1a),
- déplacer le dispositif le long d'une surface d'application de sorte que le cordon de matériau (9) est formé sur la surface d'application par le matériau sortant,
- modifier la section transversale de la région de bouche grâce à l'actionneur afin de modifier le contour du cordon de matériau (9).

14. Procédé selon la revendication 12 ou 13, dans lequel au moins 100 g, de manière préférée au moins 1 kg, de manière particulièrement préférée au moins 3 kg et/ou au plus 25 kg, de manière préférée au plus 20 kg, de matériau sont appliqués par minute et/ou dans lequel le cordon de matériau présente une largeur d'au moins 20 mm, de manière préférée d'au moins 30 mm, de manière particulièrement préférée d'au moins 50 mm et/ou d'au plus 400 mm, de manière préférée d'au plus 300 mm, de manière particulièrement préférée d'au plus 200 mm.

15. Procédé selon l'une quelconque des revendications 12 à 14, dans lequel un ou plusieurs cordon(s) de matériau (9) est/sont produit(s) en utilisant le même corps de buse (1) et le ou les cordon(s) de matériau (9) présente(nt) un poids combiné d'au moins 100 kg, de manière préférée d'au moins 500 kg, de manière particulièrement préférée d'au moins 800 kg et/ou d'au plus 3000 kg et/ou dans lequel la surface d'application est une surface d'un composant d'éolienne, de manière préférée une pale de rotor d'éolienne.
